(19) Europäisches Patentamt
European Patent Office
Office européen des brevets

(11) **EP 4 346 279 A1**

(12) **EUROPEAN PATENT APPLICATION**

(43) Date of publication:
**03.04.2024 Bulletin 2024/14**

(21) Application number: **23198233.1**

(22) Date of filing: **19.09.2023**

(51) International Patent Classification (IPC):
**H04W 36/00** (2009.01)    **G06N 3/09** (2023.01)
**G06N 3/0442** (2023.01)

(52) Cooperative Patent Classification (CPC):
**H04W 36/00833; H04L 41/16; H04W 36/00837;**
G06N 3/0442; G06N 3/09; H04W 36/0079;
H04W 36/085; H04W 36/305

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022  FI 20225856**

(71) Applicant: **Nokia Technologies Oy
02610 Espoo (FI)**

(72) Inventors:
• **KHATIBI, Sina
  Munich (DE)**
• **MASRI, Ahmad
  Tampere (FI)**

(74) Representative: **Nokia EPO representatives
Nokia Technologies Oy
Karakaari 7
02610 Espoo (FI)**

(54) **FEEDBACK FOR MACHINE LEARNING BASED NETWORK OPERATION**

(57)    Example embodiments may relate to controlling re-training of a machine learning (ML) model deployed at a device. A method may comprise: performing, by a device associated with a communication network, a task with a ML model to obtain an output, wherein the output is configured to be used for performance of a network operation of the communication network; receiving, from an access node of the communication network, feedback data indicative of a cause of a failure of the network operation; and determining, based on the feedback data, to perform at least one of the following: re-training the machine learning model for performing the task, updating at least one parameter of a non-machine learning algorithm associated with performance of the task with the machine learning model, refraining from re-training the machine learning model, or refraining from updating the at least one parameter of the non-machine learning algorithm.

FIG. 2

EP 4 346 279 A1

**Description**

**TECHNICAL FIELD**

Various example embodiments generally relate to the field of communication networks. Some example embodiments relate to controlling re-training of a machine learning (ML) model deployed at a device such as a user equipment or updating parameters of a non-ML model associated with the ML model.

**BACKGROUND**

Machine learning may be used to address complexity of managing communication networks, or to improve their performance. In case of wireless access networks, machine learning may be used for example for mobility optimization, scheduling beamforming in massive multiple-input multiple output (MIMO) networks, indoor positioning, or configuration of uplink or downlink channels. Machine learning models may be re-trained while being deployed in the field, for example at a device such as user equipment.

**SUMMARY**

This summary is provided to introduce a selection of concepts in a simplified form that are further described below in the detailed description. This summary is not intended to identify key features or essential features of the claimed subject matter, nor is it intended to be used to limit the scope of the claimed subject matter.

According to a first aspect, a method is disclosed. The method may comprise performing, by a device associated with a communication network, a task with a machine learning model to obtain an output, wherein the output is configured to be used for performance of a network operation of the communication network; receiving, from an access node of the communication network, feedback data indicative of a cause of a failure of the network operation; and determining, based on the feedback data, to perform at least one of the following: re-training the machine learning model for performing the task, updating at least one parameter of a non-machine learning algorithm associated with performance of the task with the machine learning model, refraining from re-training the machine learning model, or refraining from updating the at least one parameter of the non-machine learning algorithm.

According to an example embodiment of the first aspect, the cause is indicative of a source of the failure, and the method further comprises: re-training the machine learning model for the task or updating the at least one parameter of the non-machine learning model, in response to determining that the source of the failure is the device; and refraining from re-training the machine learning model or from updating the at least one parameter of the non-machine learning model, in response to determining that the source of the failure is not the device.

According to an example embodiment of the first aspect, the method further comprises: suspending, based on the feedback data, inference with the machine learning model during the re-training of the machine learning model; and performing the task with a second non-machine learning algorithm during the re-training of the machine learning model.

According to an example embodiment of the first aspect, the inference with the machine learning model is suspended, in response to receiving a predetermined number of feedback messages indicative of the device as the source of the failure.

According to an example embodiment of the first aspect, the method further comprises: transmitting a request for the feedback data to the access node.

According to an example embodiment of the first aspect, the request for feedback data is transmitted in a radio resource control re-establishment request or a radio resource control reconfiguration complete message.

According to an example embodiment of the first aspect, the request for the feedback data is transmitted to a serving access node of the device.

According to an example embodiment of the first aspect, the network operation comprises a handover of the device.

According to an example embodiment of the first aspect, the feedback data is received from a target access node of the handover.

According to an example embodiment of the first aspect, the task comprises at least one of the following: determining a time for initiating the handover, or determining an identifier of the target access node of the handover.

According to an example embodiment of the first aspect, the feedback data comprises an indication of at least one of: the handover having been initiated too early by the device, the handover having been initiated too late by the device, the handover having been initiated at a substantially correct time by the device, a time interval between reception of a handover measurement report by a source access node of the handover and initiation of handover preparation of the target access node by the source access node, an identifier of at least one access node that has rejected the handover of the device, a reason for the rejection of the handover by the at least one access node, a duration of a handover preparation phase, or a time interval used by the source access node for preparation of one or more target cells for the handover.

According to an example embodiment of the first aspect, the network operation comprises a beam switch of the device, and the task comprises one of the following: determining a time for the beam switch, or determining an identifier of a beam for the beam switch.

According to an example embodiment of the first aspect, the network operation comprises a conditional handover or a layer 1 or 2 mobility of the device, and the task comprises determining a list of target cells for the conditional handover or layer 1 or 2 mobility.

According to an example embodiment of the first aspect, the feedback data comprises an indication of replacement or cancellation of a target access node of the conditional handover or the layer 1 or 2 mobility of the device.

According to an example embodiment of the first aspect, the method further comprises: receiving, in a radio resource control re-establishment message or a radio resource connection reconfiguration message, an indication of availability of the feedback data; transmitting, to the access node, a network information request comprising the request for the feedback data; and receiving the feedback data in a network information response message.

According to a second aspect, a method is disclosed. The method may comprise obtaining, by an access node of a communication network, feedback data indicative of a cause of a failure of a network operation of the communication network, wherein performance of the network operation is based on an output of a machine learning model configured to perform a task at a device associated with the communication network; and transmitting, by the access node, the feedback data to the device.

According to an example embodiment of the second aspect, the feedback data is transmitted to the device to enable the device to determine whether to re-train the machine learning model for performing the task, whether to update at least one parameter of a non-machine learning algorithm associated with performance of the task with the machine learning model, whether to refrain from re-training the machine learning model, or whether to refrain from updating the at least one parameter of the non-machine learning algorithm.

According to an example embodiment of the second aspect, the cause is indicative of a source of the failure.

According to an example embodiment of the second aspect, the method comprises: obtaining the feedback data and transmitting the feedback data to the device, in response to receiving a request for the feedback data from the device.

According to an example embodiment of the second aspect, the request for the feedback data is received in a radio resource control re-establishment request or a radio resource control reconfiguration complete message.

According to an example embodiment of the second aspect, the network operation comprises a handover of the device.

According to an example embodiment of the second aspect, the method comprises: obtaining the feedback data based on reception of a user equipment context of the device from a source access node of the handover, wherein the access node comprises a target access node of the handover.

According to an example embodiment of the second aspect, the method comprises: obtaining the feedback data based on reception of a user equipment context of the device from a last serving access node of the device, in response to connection re-establishment of the device with the access node.

According to an example embodiment of the second aspect, the feedback data comprises an indication of at least one of: the handover having been initiated too early by the device, the handover having been initiated too late by the device, the handover having been initiated at a substantially correct time by the device; a time interval between reception of a measurement report from the device by the source access node and initiation of handover preparation of the target access node by the source access node; an identifier of at least one target access node that has rejected the handover of the device; a reason for the rejection of the handover by the at least one target access node; a time interval of a handover preparation phase, or a time interval used by the source access node for preparation of one or more target cells for the handover.

According to an example embodiment of the second aspect, the method comprises: transmitting, in a radio resource control re-establishment message or a radio resource connection reconfiguration message, an indication of availability of the feedback data; receiving, from the device, a network information request comprising the request for the feedback data; and transmitting the feedback data in a network information response message

According to a third aspect, an apparatus is disclosed. The apparatus may comprise means for performing a method according to the first or second aspect, or any example thereof.

According to a fourth aspect, a computer program or a computer program product is disclosed. The computer program or computer program product may comprise instructions, which when executed by an apparatus, cause the apparatus perform the method according to the first or second aspect, or any example thereof.

According to a fifth aspect, an apparatus is disclosed. The apparatus may comprise at least one processor; and at least one memory storing instructions that, when executed by the at least one processor, cause the apparatus at least to: perform, by a device associated with a communication network, a task with a machine learning model to obtain an output, wherein the output is configured to be used for performance of a network operation of the communication network; receive, from an access node of the communication network, feedback data indicative of a cause of a failure of the network operation; and determine, based on the feedback data, to perform at least one of the following: re-train the machine learning model for performing the task, update at least one parameter of a non-machine learning algorithm associated with performance of the task with the machine learning model, refrain from re-training the machine learning model, or refrain from updating the at least one parameter of the non-machine learning algorithm.

According to an example embodiment of the fifth aspect, the cause is indicative of a source of the failure, and the instructions may be configured, when executed by the at least one processor, to cause the apparatus to: re-training the machine learning model for the task or updating the at least one parameter of the non-machine learning model, in response to determining that the source of the failure is the device; and refraining from re-training the machine learning model or from updating the at least one parameter of the non-machine learning model, in response to determining that the source of the failure is not the device.

According to an example embodiment of the fifth aspect, the instructions may be configured, when executed by the at least one processor, to cause the apparatus to: suspend, based on the feedback data, inference with the machine learning model during the re-training of the machine learning model; and perform the task with a second non-machine learning algorithm during the re-training of the machine learning model.

According to an example embodiment of the fifth aspect, the inference with the machine learning model is configured to be suspended, in response to receiving a predetermined number of feedback messages indicative of the device as the source of the failure.

According to an example embodiment of the fifth aspect, the instructions may be configured, when executed by the at least one processor, to cause the apparatus to: transmit a request for the feedback data to the access node.

According to an example embodiment of the fifth aspect, the request for feedback data is configured to be transmitted in a radio resource control re-establishment request or a radio resource control reconfiguration complete message.

According to an example embodiment of the fifth aspect, the request for the feedback data is configured to be transmitted to a serving access node of the device.

According to an example embodiment of the fifth aspect, the network operation comprises a handover of the device.

According to an example embodiment of the fifth aspect, the feedback data is configured to be received from a target access node of the handover.

According to an example embodiment of the fifth aspect, the task comprises at least one of the following: determining a time for initiating the handover, or determining an identifier of the target access node of the handover.

According to an example embodiment of the fifth aspect, the feedback data comprises an indication of at least one of: the handover having been initiated too early by the device, the handover having been initiated too late by the device, the handover having been initiated at a substantially correct time by the device, a time interval between reception of a handover measurement report by a source access node of the handover and initiation of handover preparation of the target access node by the source access node, an identifier of at least one access node that has rejected the handover of the device, a reason for the rejection of the handover by the at least one access node, a duration of a handover preparation phase, or a time interval used by the source access node for preparation of one or more target cells for the handover.

According to an example embodiment of the fifth aspect, the network operation comprises a beam switch of the device, and the task comprises one of the following: determining a time for the beam switch, or determining an identifier of a beam for the beam switch.

According to an example embodiment of the fifth aspect, the network operation comprises a conditional handover or a layer 1 or 2 mobility of the device, and the task comprises determining a list of target cells for the conditional handover or layer 1 or 2 mobility.

According to an example embodiment of the fifth aspect, the feedback data comprises an indication of replacement or cancellation of a target access node of the conditional handover or the layer 1 or 2 mobility of the device.

According to an example embodiment of the fifth aspect, the instructions may be configured, when executed by the at least one processor, to cause the apparatus to: receive, in a radio resource control re-establishment message or a radio resource connection reconfiguration message, an indication of availability of the feedback data; transmit, to the access node, a network information request comprising the request for the feedback data; and receive the feedback data in a network information response message.

According to a sixth aspect, an apparatus is disclosed. The apparatus may comprise at least one processor; and at least one memory storing instructions that, when executed by the at least one processor, cause the apparatus at least to: obtain, by an access node of a communication network, feedback data indicative of a cause of a failure of a network operation of the communication network, wherein performance of the network operation is based on an output of a machine learning model configured to perform a task at a device associated with the communication network; and transmit, by the access node, the feedback data to the device.

According to an example embodiment of the sixth aspect, the feedback data is configured to be transmitted to the device to enable the device to determine whether to re-train the machine learning model for performing the task, whether to update at least one parameter of a non-machine learning algorithm associated with performance of the task with the machine learning model, whether to refrain from re-training the machine learning model, or whether to refrain from updating the at least one parameter of the non-machine learning algorithm.

According to an example embodiment of the sixth aspect, the cause is indicative of a source of the failure.

According to an example embodiment of the sixth aspect, the instructions may be configured, when executed by the at least one processor, to cause the apparatus to: obtain the feedback data and transmit the feedback data to the device, in response to receiving a request for the feedback data from the device.

According to an example embodiment of the sixth aspect, the request for the feedback data is configured to be received in a radio resource control re-establishment request or a radio resource control reconfiguration complete message.

According to an example embodiment of the sixth aspect, the network operation comprises a handover of the device.

According to an example embodiment of the sixth aspect, the instructions may be configured, when executed by the at least one processor, to cause the apparatus to: obtain the feedback data based on reception of a user equipment context of the device from a source access node of the handover, wherein the access node comprises a target access node of the handover.

According to an example embodiment of the sixth aspect, the instructions may be configured, when executed by the at least one processor, to cause the apparatus to: obtain the feedback data based on reception of a user equipment context of the device from a last serving access node of the device, in response to connection re-establishment of the device with the access node.

According to an example embodiment of the sixth aspect, the feedback data comprises an indication of at least one of: the handover having been initiated too early by the device, the handover having been initiated too late by the device, the handover having been initiated at a substantially correct time by the device; a time interval between reception of a measurement report from the device by the source access node and initiation of handover preparation of the target access node by the source access node; an identifier of at least one target access node that has rejected the handover of the device; a reason for the rejection of the handover by the at least one target access node; a time interval of a handover preparation phase, or a time interval used by the source access node for preparation of one or more target cells for the handover.

According to an example embodiment of the sixth aspect, the instructions may be configured, when executed by the at least one processor, to cause the apparatus to: transmit, in a radio resource control re-establishment message or a radio resource connection reconfiguration message, an indication of availability of the feedback data; receive, from the device, a network information request comprising the request for the feedback data; and transmit the feedback data in a network information response message

According to a seventh aspect, a (non-transitory) computer readable medium is disclosed. The (non-transitory) computer readable medium may comprise program instructions that, when executed by an apparatus, cause the apparatus to perform a method according to the first or second aspect, or any example thereof.

According to some aspects, there is provided the subject matter of the independent claims. Some further aspects are defined in the dependent claims. Many of the attendant features will be more readily appreciated as they become better understood by reference to the following description considered in connection with the accompanying drawings.

## LIST OF DRAWINGS

The accompanying drawings, which are included to provide a further understanding of the example embodiments and constitute a part of this specification, illustrate example embodiments and, together with the description, help to explain the example embodiments. In the drawings:

FIG. 1 illustrates an example of a communication network;
FIG. 2 illustrates an example of operating a machine learning model at a user terminal;
FIG. 3 illustrates an example of a connection re-establishment procedure;
FIG. 4 illustrates an example of a handover procedure;
FIG. 5 illustrates an example of connection re-establishment to a target access node in case of a too late handover;
FIG. 6 illustrates an example of connection re-establishment to a source access node in case of a too early handover;
FIG. 7 illustrates an example of connection re-establishment to another access node in case of handover to a wrong cell;

FIG. 8 illustrates an example of a conditional handover procedure;

FIG. 9 illustrates an example of successful operation of handover preparation;

FIG. 10 illustrates an example of unsuccessful operation of handover preparation;

FIG. 11 illustrates an example of successful handover operation;

FIG. 12 illustrates an example of successful operation of conditional handover cancellation;

FIG. 13 illustrates an example of a failure indication;

FIG. 14 illustrates an example of a reactive handover;

FIG. 15 illustrates an example of a machine learning based predictive handover;

FIG. 16 illustrates an example of a handover process with feedback to user equipment;

FIG. 17 illustrates an example of a connection re-establishment procedure with feedback to user equipment;

FIG. 18 illustrates an example of a message exchange for retrieving feedback data;

FIG. 19 illustrates an example of an apparatus configured to practise one or more embodiments;

FIG. 20 illustrates an example of a method for operating a machine learning model by a device; and

FIG. 21 illustrates an example of a method for enabling operation of a machine learning model of a device.

Like references are used to designate like parts in the accompanying drawings.

**DESCRIPTION**

Reference will now be made to embodiments, examples of which are illustrated in the accompanying drawings. The description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

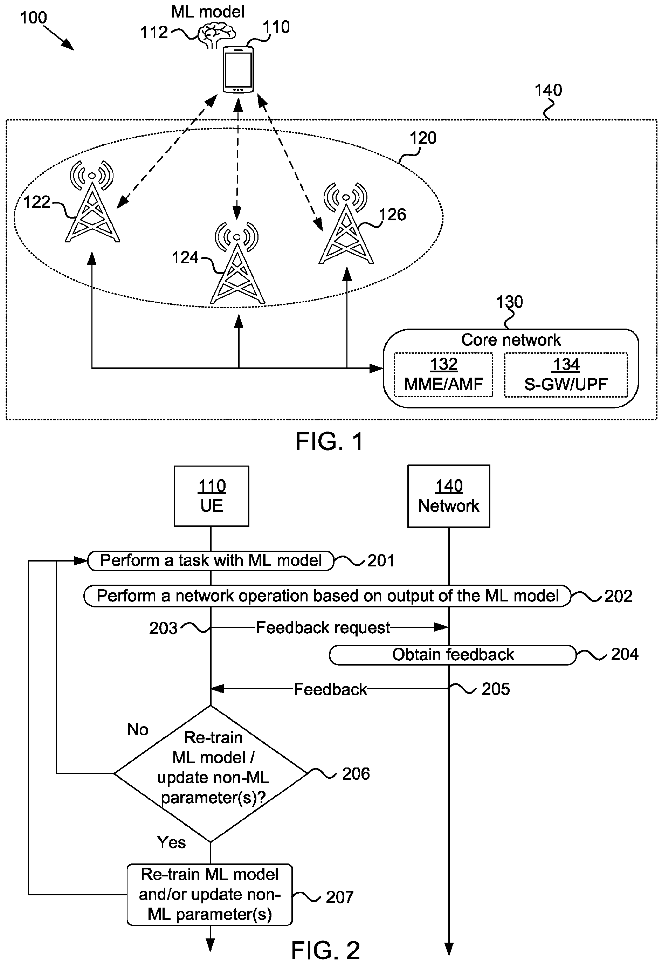

FIG. 1 illustrates an example of a communication network. Communication network 100 may comprise a device, represented in this example by user equipment (UE) 110, such as for example a smart phone, a tablet, a vehicle, or the like. UE 110 may include a machine learning (ML) model 112, for example a neural network, a genetic algorithm, a support vector machine, or the like. ML model 112 may be configured to perform a task, for example target cell selection for a handover, beam selection, enhanced channel estimation, compression of channel state information, positioning, reference signal reduction, channel prediction, or the like, as will be further described below. Communication network 100 may be configured in accordance with, or based on, standard(s) of the 3rd Generation Partnership Project (3GPP), such as for example 4G LTE (Long-Term Evolution) or 5G NR (New Radio). It is however appreciated that example embodiments presented herein are not limited to these example networks and they may be applied in any present or future wireless or wired communication networks, or combinations thereof, for example other type of cellular networks, short-range wireless networks (e.g., Wi-Fi), broadcast or multicast networks, or the like, including any future cellular communication systems defined by 3GPP.

UE 110 may communicate with one or more access nodes, represented in this example by 5th generation access nodes (gNB) 122, 124, 126, over wireless radio channel(s). Access nodes may be also referred to as access points or base stations and they may be part of a radio access network 120. Communications between UE 110 and gNB(s) 122, 124, 126 may be bidirectional and hence any of these entities may be configured to operate as a transmitter and/or a receiver. An access node may be associated with one or more cells, which may correspond to a geographical area covered by the access node, for example at a certain frequency range. Communication network 100 may therefore comprise a cellular network.

Functionality of an access node may be distributed between a central unit (CU), for example a gNB-CU, and one or more distributed units (DU), for example gNB-DUs. It is therefore appreciated that access node functionality described herein may be implemented at a gNB, or divided between a gNB-CU and a gNB-DU. Network elements such as gNB, gNB-CU, and gNB-DU may be generally referred to as network nodes or network devices. Although depicted as a single device, a network node may not be a stand-alone device, but for example a distributed computing system coupled to a remote radio head. For example, a cloud radio access network (cRAN) may be applied to split control of wireless functions to optimize performance and cost.

In context of handover, an access node of a source cell may be called a source access node and an access node of a target cell may be called a target access node. A cell served by a source access node may be called a source cell and a cell served by a target access node may be called a target cell. In case of connection re-establishment, for example due to a radio link failure (RLF), the access node that served LTE 110 at the time of losing the connection may be called a last serving access node (e.g., last serving gNB) for LTE 110. For example, after a radio link failure with gNB 122, which is in this example the last serving gNB, UE 110 may re-establish the connection with gNB 124. The gNB(s) 122, 124, 126 enable LTE 110 to access various services and functions of core network 130. RAN 120 and core network 130 may be collectively referred to as (cellular) network 140. A 5G RAN may be also referred to as next generation RAN (NG-RAN) and a gNB may be also referred to as an NG-RAN node.

Core network 130 may comprise a mobility management entity (MME) or access and mobility management function (AMF) 132. An MME may be used when core network 130 comprises an evolved packet core (EPC) of LTE. An AMF may be used when core network comprises a 5G core (5GC) network. MME/AMF 132 may receive connection and session request related data from UE 110 (via an access node of the RAN 120). MME/AMF 132 may be configured to control connection and mobility management of LTEs in communication network 100. Core network 130 may comprise a serving gateway (S-GW) or a user plane function (UPF) 134. An S-GW may be used when core network 130 comprises the EPC of LTE. A UPF may be used when core network 130 comprises the 5GC. S-GW/UPF 134 may be configured to handle user data part of a communication session, for example to encapsulate/decapsulate protocol data units (PDU).

ML model 112 may be trained for a specific task, for example mobility robustness optimization (MRO) in cellular mobile communications. In case of MRO, handover (HO) related key performance indicators (KPIs) may be collected from communication network 100 and used for determining or updating handover parameters. MI,-based MRO methods may be used for optimizing handover parameters to improve mobility performance, for example, to reduce mobility-related failures or unnecessary handovers.

One approach for MRO is to adjust cell individual offset (CIO) and/or time-to-trigger (TTT) parameters, which may be used to control initiation of the handover procedure. CIO may be applied to make a signal from the associated cell appear stronger, thereby increasing the likelihood of handover to that cell. When performing handover measurements, UE 110 may add the CIO to a measured signal strength value. The handover may not be however initiated until a triggering requirement (e.g., received signal strength of a target cell being above a threshold) is fulfilled for the TTT interval. TTT may be thus used to prevent instantaneous variations in the signal strength from causing a handover. Since the CIO and/or TTT may be set individually for different cells, network 140 may control handover between any pair of cells based on setting different CIO and/or TTT values. A handover may refer to change of the serving cell for UE 110, e.g., from gNB 122 as a source gNB to gNB 124 as a target gNB. Handover may be performed by any suitable manner. An example of a handover is Layer 1/ Layer 2 (L1/L2) mobility, where the cell change may be coordinated at the two lowest layers of the protocol stack, as will be further described below.

Different CIO and TTT configurations may be defined for example for LTEs with different speeds. UE 110 may be a mobile terminal. The faster UE 110, the sooner the handover procedure may be configured to be initiated. This may be achieved for example by increasing the CIO (e.g., the offset between the measured signal power of the serving cell and the target cell) or decreasing the TTT (i.e., the interval, during which the trigger requirement needs to be fulfilled). In contrast, at cell boundaries dominated by slowly moving UEs, the handover procedure may be configured to be initiated later, for example by choosing a lower values for CIO or higher value for TTT. In some scenarios, changing the CIO(s) rather than TTT(s) may be a preferable approach.

The speed of LTE 110 may not however be the only criterion for configuring handover parameters, such as CIO or TTT. Slowly moving LTEs may be at risk of performing unnecessarily early handovers when moving through areas with significant propagation changes (e.g., very steep shadowing slope). Rapidly moving LTEs may not be at risk of unnecessarily early handovers when moving through areas with no significant propagation changes (e.g., flat shadowing slopes). Hence, even if instantaneous velocity of LTE 110 could be estimated accurately, velocity-based methods may not always provide a sufficient solution for optimising handover parameters. Nevertheless, speed may be used as a simplified example such that a "slow" UE may refer to an uncritical UE which is not under a failure risk but may still suffer from ping-pong handover between two cells, and a "fast" UE referring to a critical UE which is at failure risk.

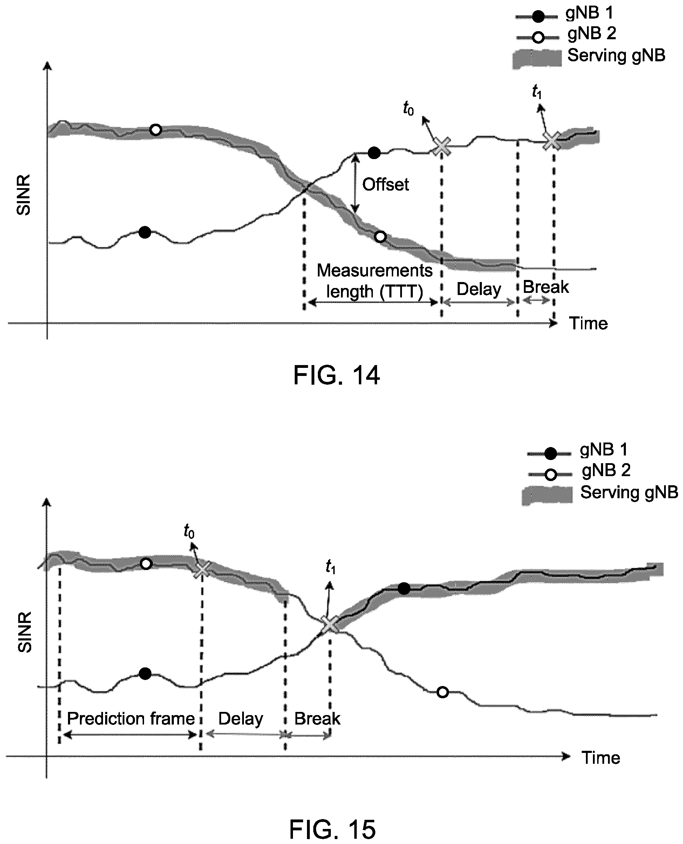

In radio network systems, predictive decision making including ML approaches may be used to improve the mobility handover procedure of mobile users (UEs), when compared to algorithm or rule based heuristic approaches, which are examples of non-MI, algorithms. One example is the predictive handover illustrated in FIG. 15. Like predictive handover, different approaches may include different measurements by LTE 110, such as for example measurement of reference signal received power (RSRP) or reference signal received quality (RSRQ), to be used as inputs to a ML model deployed at network 140 for predicting the target cell and the time to execute the handover. However, there may be challenges in reporting the aforementioned measurement data from LTE 110 efficiently to network 140, for example considering constraints such as, but not limited to, radio resource consumption overhead, or power consumption of LTE 110. Furthermore, only a subset of LTE measurements may be reported to network 140, e.g., periodically or triggered by predefined event(s). Also, the delay between the measurement and transmission of the associated measurement report may degrade the performance of a ML model running at network 140.

At least for these reasons it may be beneficial to provide ML model 112 at UE 110, where the measurements are available with more details and better accuracy. Performing inference with ML model 112 at UE 110 may not however address all the aforementioned issues, as training phase of the model may require collection of a training dataset (e.g., signal strength measurements) from many LTEs, which may lead to a similar problem setting. Moreover, ML solutions may be implemented based on proprietary models, vendor-specific models, or standardized models, which may favour provision of the ML model at the UE side. As a result of these limitations, as well as opportunities provided by distributed learning techniques, such as federated earning (FL), transfer learning, or collaborative learning, training of ML model 112 at the LTE side may provide a promising solution. Example embodiments of the present disclosure address scenarios where a ML model (e.g., mobility intelligence) is hosted at UE 110. ML model 112 may be trained at UE 110 either completely or partially (e.g., with collaborative learning, federated training, or transfer learning), while reducing the overhead of reporting associated measurements.

In general, feedback on the output of the system may be used improve future system performance. For example, ML based functionality at UE 110 in a radio system may benefit from feedback on its output or actions from network 140. For example, ML model 112 may be configured to predict an action to be executed at network 140 (e.g., handover), using information available to UE 110. However, this action may will fail to be executed due to a network related reason. In such situation, the information available to LTE 110 and the action of UE 110 may be correct and the failure may be caused by a network related issue, which may be hidden from UE 110. UE 110 may therefore unnecessarily assume that an incorrect output of ML model 112 is the reason behind the failure and therefore UE 110 may unnecessarily re-train or update ML model 112, even if performance of ML model 112 were in fact sufficient. Unnecessary re-training may cause the performance of ML model 112 to degrade, for example due to overfitting to the training data.

In case of non-MI, MRO algorithms, LTE 110 may obtain information about its position, serving cell and/or beam(s), neighbour cell measurement(s), or the like. However, UE 110 may not be aware of any MRO root cause analysis, e.g., analysis of the performance of the handover and what went wrong during the handover. While this information may be collected at network 140, it may not be configured to share it with UE 110. This may be the case for example if ML-based MRO control is provided at network 140. When ML-based functionality is implemented at LTE 110, it may be beneficial to provide additional information on feedback on performance of network operations (e.g., mobility procedures) to enable UE 110 to evaluate performance of its ML model 112, in order to provide corrective solutions, or to re-train ML model 112 to avoid similar issues.

FIG. 2 illustrates an example of operating a machine learning model at a communication network. Operations of network 140 may be performed by at least an access node of network 140, for example gNB 122, which may be in some example embodiments be configured to operate as a target access node for handover of LTE 110.

At operation 201, LTE 110 may perform a task with ML model 112. Performing a task may comprise executing (inferring) ML model 112, which has been trained for the task. As noted above, UE 110 may obtain ML model 112 by receiving it from another device, e.g. a device of network 140, retrieve a preconfigured model from a memory of LTE 110, train a non-trained model, or fine-tune a pre-trained model. The task may for example be prediction of a target cell of handover, time of initiating the handover, a target beam for a beam switch, a time for the beam switch, or the like. In general, the output of ML model 112, when executed by UE 110 for performing the task, may be configured to be used in at least one network operation, for example handover (unconditional or conditional), of communication network 100. Further examples of the task include prediction of a target beam and channel estimation/prediction. The prediction of the target beam may be used for beam switch of LTE 110, as another example of the network operation. ML-based channel estimation/prediction may be used for determination of a modulation and coding scheme (MCS) for LTE 110, as a further example of the network operation.

At operation 202, LTE 110 and/or network 140 may perform the network operation. It is noted that the network operation may be performed by network 140 alone or in cooperation with LTE 110. The network operation may be performed using the output of ML model 112. For example, in case of handover, UE 110 may report the predicted target cell identifier and/or the predicted time of initiating the handover to network 140, which may perform necessary actions to prepare and execute the handover. In general, the network operation may include an operation performed by network 140 with respect to UE 110, based on the output of ML model 112. Performing a network operation based on the output of ML model 112 may include LTE 110 triggering performance of the network operation based on the output of ML model 112. Hence, the output of the ML model need not necessarily be used in performance of the network operation.

At operation 203, UE 110 may transmit a request for feedback data for the network operation. This may enable LTE 110 to determine whether to re-train its ML model 112 or to refrain from re-training ML model 112, or, whether to update parameter(s) of a non-MI, algorithm associated with performance of the task with ML model 112.

At operation 204, network 140 may obtain the feedback data. The feedback data may be indicative of a cause of a failure of the network operation. A cause may include a source of the failure (e.g., a target cell) and/or a reason of the failure (e.g., the target cell being overloaded). The cause may include qualitative feedback data, for example the handover having been initiated too late, too early, or at a substantially correct time, or quantitative feedback, for example time interval(s) or duration(s) of the handover process at network 140.

At operation 205, network 140 may transmit the feedback data to LTE 110. Network 140 may obtain the feedback data or transmit the feedback data, in response to receiving the request for the feedback data from LTE 110. It is however possible to transmit the feedback data without the request from LTE 110, for example to reduce the amount of data transmissions between UE 110 and network 140. UE 110 may receive the feedback data.

At operation 206, LTE 110 may determine, based on the feedback data, whether to re-train ML model 112 for performing the task or to refrain from re-training ML model 112. For example, UE 110 may determine to re-train ML model 112, in response to determining that the source of the failure is UE 110 (e.g., ML model 112). However, UE 110 may determine to refrain from re-training ML model 112 (e.g. not re-train ML model 112, at least for a certain period), in response to determining that the source of the failure is not LTE 110 (e.g., ML model 112). The source of the failure may be indicated in the feedback data explicitly, e.g., by a signaling field entry "UE", "Network", or similar. The source of the failure may be indicated implicitly, e.g., by a qualitative signaling field entry, e.g., "too early" or "too late" in case of a handover, based on which UE 110 may determine that it is the source of the failure. A qualitative signaling field entry for the handover may also include an entry of "Correct time", based on which UE 110 may determine that it is not the source of failure.

Alternatively, or additionally, UE 110 may determine whether to update parameter(s) of a non-MI, algorithm that is associated with performance of the task with ML model 112. The non-MI, algorithm may be associated with performance of the task for example by being configured to trigger performance of the task with ML model 112 or by being configured to perform the same task itself. This may be beneficial for example in case of a hybrid algorithm (ML/non-ML) which may use a combination of rule-based approaches with configurable parameter(s) and machine learning. For example, UE 110 may be configured with a non-MI, algorithm, which is configured to be used to provide the output for performance of the network operation, when received signal power is lower than a threshold. On the other hand, if the received signal power is above the threshold, LTE 110 may be configured to perform the same task with ML model 112. Based on the feedback data, LTE 110 may determine to update the threshold, for example to use ML model 112 for the task at a lower level of received signal strength. Determining whether to update the parameter(s) may be based on determining whether UE 110 is the source of the failure, as described above.

In response to determining to refrain from re-training ML model 112, or to refrain from updating the parameter(s) of the non-MI, algorithm, LTE 110 may move back to operation 201 for subsequent performance of the task with the same ML model 112 (or non-ML algorithm). Alternatively, the process may be ended. In response to determining to re-train ML model 112 or to update parameter(s) of the non-MI, algorithm, UE 110 may move to operation 207.

At operation 207, UE 110 may re-train ML model 112. Re-training may include further training of ML model 112 with training data obtained prior to reception of the feedback data at operation 205, or re-training ML model 112 based on the received feedback data. The feedback data may be used as ground-truth data for re-training ML model 112, or ground-truth data may be derived from the feedback data. The obtained ground-truth data may be used, in association with respective ML model inputs stored at UE 110, to re-train ML model 112. During re-training of ML model 112, UE 110 may suspend, based on the feedback data, inference with ML model 112 and perform the task with another (second) non-MI, algorithm. UE 110 may suspend inference with ML model 112, for example, in response to receiving a predetermined number of feedback messages indicative of LTE 110, e.g., ML model 112, as the source of the failure.

In response to completing re-training of ML model 112, UE 110 may move back to operation 201 for subsequent performance of the task with the re-trained ML model 112. Alternatively, the process may be ended. Alternatively, or additionally, UE 110 may update parameter(s) of a non-MI, algorithm that is associated with performance of the task with ML model 112, for example the threshold for using ML model 112 for obtaining the output for performance of the network operation.

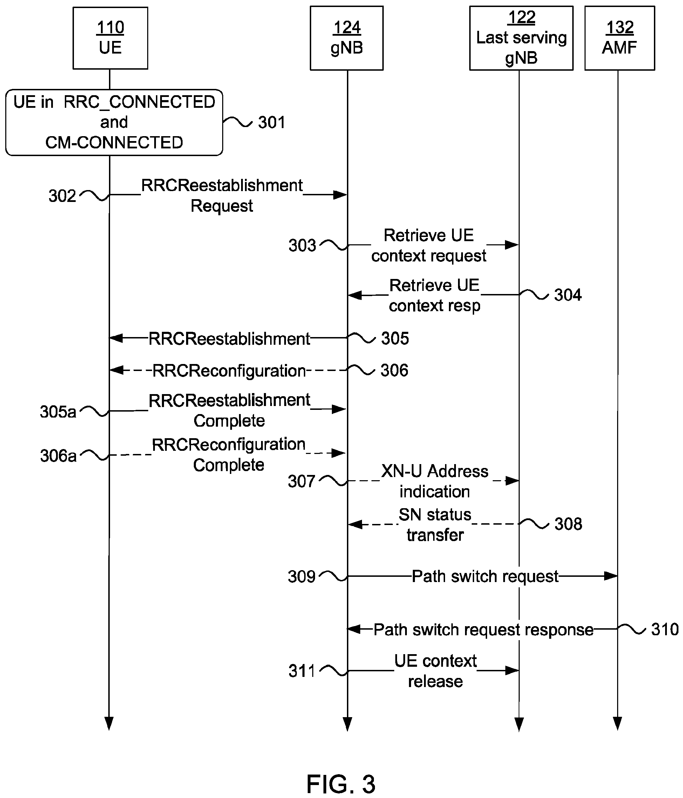

FIG. 3 illustrates an example of a connection re-establishment procedure. Even though this example is provided in context of 5G, similar functionality may be provided in other type of networks as well.

At operation 301, UE 110 may be in a radio resource control (RRC) connected state (e.g., RRC_CONNECTED). UE 110 may be also in connection management (CM) connected state (e.g., CM-CONNECTED).

In general, LTE 110 may be in various RRC states (modes) with respect to network 140. When UE 110 is powered up, it may be in a disconnected state or an idle state (e.g. RRC_IDLE). UE 110 may move to a connected state (e.g. RRC_CONNECTED) for example through connection establishment to network 140. If LTE 110 is not active for a certain time, UE 110 may move from the connected state to an inactive state (e.g. RRC _INACTIVE).

In the idle state UE 110 may not be associated with an RRC context. From the network point of view there may not be a connection between RAN 120 and core network 130 for LTE 110. Therefore, LTE 110 may not communicate application data with network 140. UE 110 may be also in a sleep-mode and only intermittently wake-up, for example for receiving paging messages. UE 110 may however perform cell re-selection and other idle state operations. In the connected state, UE 110 may be associated with an RRC context. In the connected state, LTE 110 may communicate with core network 130 via RAN 120, for example gNB 122.

In the inactive state, LTE 110 may stay registered to network 140, but the connection to radio access network 120 may be suspended. However, RAN 120 may store the UE context, which enables the connection to be quickly resumed. Connection to core network 130 may be maintained in the inactive state.

In the connected state, the UE 110 may perform radio resource management (RRM) measurements, for example in relation to a mobility (handover) procedure. UE 110 may report its measurement results to core network 130 (e.g., via gNB 122), for example periodically and/or in response to detecting a reporting triggering criterion to be fulfilled. Even though some example embodiments have been described using the RRC_IDLE, RRC_INACTIVE, or RRC_CONNECTED states of the 5G system as examples, it is appreciated the example embodiments may be applied to other type of idle, inactive, or connected states, for example having similar characteristics as the RRC_IDLE, RRC_INACTIVE, or the RRC_CONNECTED states. An RRC state may be also referred to as an RRC mode. In case of failure, a LTE in the connected state may initiate RRC connection re-establishment procedure to continue the RRC connection when a failure condition (e.g., radio link failure, reconfiguration failure, integrity check failure) has occurred.

Connection management (CM) states may be used to indicate the non-access stratum (NAS) signaling connection of UE 110 with AMF 132. In a CM idle state (e.g., CM-IDLE), UE 110 may not have a NAS signalling connection established with AMF 132. UE 110 may be however configured to perform cell selection/cell reselection and public land mobile network (PLMN) selection procedures. There may be no access network signalling connection for UE 110. In a CM connected state, UE 110 may have a NAS signalling connection with AMF 132. A NAS signalling connection may use a RRC connection between LTE 110 and RAN 120. UE 110 may be associated with communication network 100 by being, or having been, in any of the RRC or CM states with respect to communication network 100.

At operation 302, UE 110 may transmit an RRC re-establishment request (e.g. *RRCReestablishmentRequest*) to gNB 124. This may be in response to detecting triggering of the re-establishment to occur at a cell served by gNB 124. The RRC re-establishment request may include UE identity of UE 110, for example a combination of physical cell identifier (PCI) of the cell and cell radio network temporary identifier (C-RNTI) of LTE 110. LTE 110 may therefore re-establish the connection, providing its LTE identity to gNB 124. where the trigger for the re-establishment occurred

At operation 303, gNB 124 may transmit a retrieve UE context request to the last serving gNB 122 to request UE context of UE 110. This may be done for example in response to determining, by gNB 124, that the UE context is not locally available at gNB 124. UE context may comprise settings and configurations associated with LTE 110, such as for example scheduling information for measurements and reporting (e.g. periodicity), cell offsets, data related settings such as for example internet protocol (IP) settings, security settings, or buffering settings. UE context may for example comprise an indication of one or more of the following: a selected target cell for handover, prepared target cell(s) for the handover, handover parameter(s), CHO parameter(s) transferred to UE 110, a handover request time, measurement report request, or the like.

At operation 304, the last serving gNB 122 may transmit a retrieve UE context response to provide the UE context of LTE 110 to gNB 124.

At operations 305 and 305b, gNB 124 and UE 110 may continue re-establishment of RRC connection. The RRC re-establishment message (e.g., *RRCReestablishment*) may be transmitted on a first signaling radio bearer (SRB1).

At operations 306 and 306b, gNB 124 may perform RRC reconfiguration, for example to re-establish a second signaling radio bearer (SRB2) and one or more dedicated radio bearers (DRB), when the re-establishment procedure is ongoing. SRB1 may be configured for RRC messages, which may include a piggybacked non-access stratum (NAS) message, as well as for NAS messages prior to establishment of SRB2, for example using a downlink control channel (DCCH) logical channel. SRB2 may be used for NAS messages and for RRC messages which include logged measurement information, for example using the DCCH logical channel. SRB2 may have a lower priority than SRB1 and may be configured by the network after access stratum (AS) security activation.

At operation 307, gNB 124 may transmit an Xn-U address indication to the last serving gNB 122 in order to provide, for the retrieval of the LTE context, forwarding addresses from gNB 124 to the last serving gNB 122 for protocol data unit (PDU) session resources successfully established at gNB 124 for which forwarding was requested. Access nodes may communicate with each other over the Xn interface. Xn-U may refer to the user plane of the Xn interface.

At operation 308, the last serving gNB 122 may transmit a sequence number (SN) status transfer message to gNB 124. The SN status transfer message enables transferring sequence number, for example packet data convergence protocol (PDCP) sequence number, and hyper frame number (HFN) receiver status, as well as downlink PDCP SN and HFN transmitter status from the last serving gNB 122 to gNB 124. Operations 307 and 308 may be performed to prevent loss of user data buffered in the last serving gNB 122.

At operation 309, gNB 124 may transmit a path switch request to AMF 132, in order to request routing of user data to gNB 124. In response to receiving the path switch request, AMF 132 may perform necessary updates including the user plane path switch to gNB 124.

At operation 310, AMF 132 may transmit a path switch request response to gNB 124 to indicate completion of the path switch.

At operation 311, gNB 124 may transmit a UE context release message to the last serving gNB 122 to trigger release of the UE context of UE 110 at the last serving gNB 122.

In case of integrated access and backhaul mobile termination (IAB-MT) operating in standalone (SA) mode, an IAB-MT node may apply the same procedure as UE 110. After establishment of the backhaul, the re-establishment procedure of the IAB-MT may be part of an intra-CU backhaul radio link failure (RLF) recovery procedure for IAB-nodes.

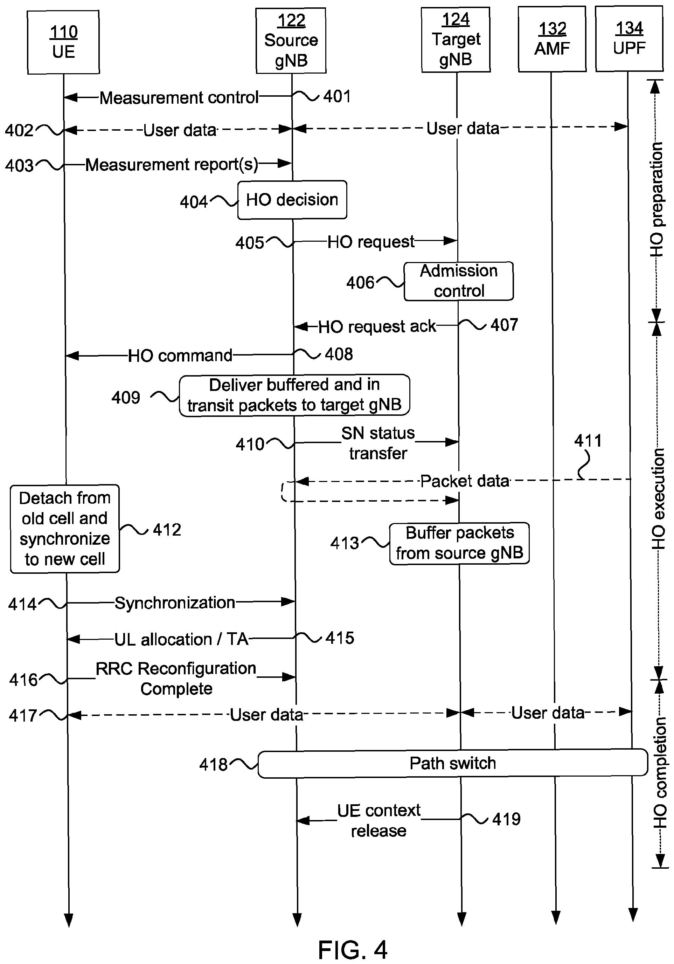

FIG. 4 illustrates an example of a handover procedure. Handover is provided as an example of a network operation that may be performed on the basis of the output of ML model 112. In case of handover, LTE 110 may co-operate with network 140 to move from a source access node (initial serving access node) to a target access node (subsequent serving access node). Even though this example has been illustrated with network functions of the SGC (AMF/LTPF), it is appreciated that similar functionality may be provided at other networks.

At operation 401, gNB 122 (acting as a source access node in this example, may transmit a measurement control message to UE 110, for example to configure handover measurements of UE 110. Operation 401 may initiate a handover preparation phase.

At operation 402, user data (e.g., data belonging to one or more applications executable at UE 110) may be exchanged between UE 110 and UPF 134 via source gNB 122.

At operation 403, measurement report(s) may be triggered at UE 110, e.g. based on the configuration of operation 401. UE 110 may transmit measurement report(s) to source gNB 122. The measurement report(s) may include results of signal strength measurements with respect to one or more cells, served for example by source gNB 122 and gNB 124 (target gNB in this example).

At operation 404, source gNB 122 may determine, based on the measurement report(s), to perform a handover for LTE 110.

At operation 405, source gNB 122 may transmit a handover request to target gNB 124.

At operation 406, target gNB 124 may perform admission control for LTE 110, for example based on whether target gNB 124 is able to allocate transmission resources to LTE 110.

At operation 407, target gNB 124 may transmit a handover request acknowledgement, for example to indicate acceptance of the handover request. The handover request acknowledgement may comprise information to be delivered by source gNB 122 to UE 110 for accessing target gNB 124, for example a new C-RNTI or security algorithm identifiers of target gNB 124. Operation 407 may terminate the handover preparation phase.

At operation 408, source gNB 122 may transmit a handover command to LTE 110. The handover command may be transmitted in a RRC reconfiguration message. Operation 408 may initiate a handover execution phase.

At operation 409, source gNB 122 may deliver buffered and in transit packets of UE 110 to target gNB 124.

At operation 410, source gNB 122 may transmit an SN status transfer message to target gNB 124, for example as described with reference to operation 308.

At operation 411, source gNB 122 may forward packet data of LTE 110 from UPF 134 to target gNB 124.

At operation 412, UE 110 may detach from old cell (source gNB 122) and synchronize to new cell (target gNB 124).

At operation 413, target gNB 124 may buffer the data packets forwarded by source gNB 122.

At operation 414, UE 110 may synchronize to target gNB 124.

At operation 415, target gNB 124 may transmit an indication of uplink (LTL) transmission resource allocation and/or a timing advance value to be used by UE 110 when transmitting data to target gNB 124.

At operation 416, UE 110 may transmit an RRC reconfiguration complete message to source gNB 122, for example in response to successfully synchronizing to or accessing target gNB 124. Operation 416 may terminate the handover execution phase. At the end of the handover execution phase, the handover has been executed such that UE 110 may start data transfer via target gNB 124.

At operation 417, UE 110 may transfer data with UPF 134 via target gNB 124. Operation 417 may initiate a handover completion phase.

At operation 418, a path switch may be performed by network 140, involving source gNB 122, target gNB 124, AMF 132, and UPF 134, in order to start delivering of the packet data of UE 110 directly from UPF 134 to target gNB 124.

At operation 419, target gNB 124 may transmit a LTE context release message to source gNB 122. In response to receiving the UE context release, source gNB 122 may remove context information of UE 110 from its memory. Because the UE context information maintained at source gNB 122 may include useful feedback information for LTE 110, source gNB 122 may transmit at least part of the UE context information to target gNB 124 before releasing it, as will be further described below. Operation 419 may terminate the handover completion phase.

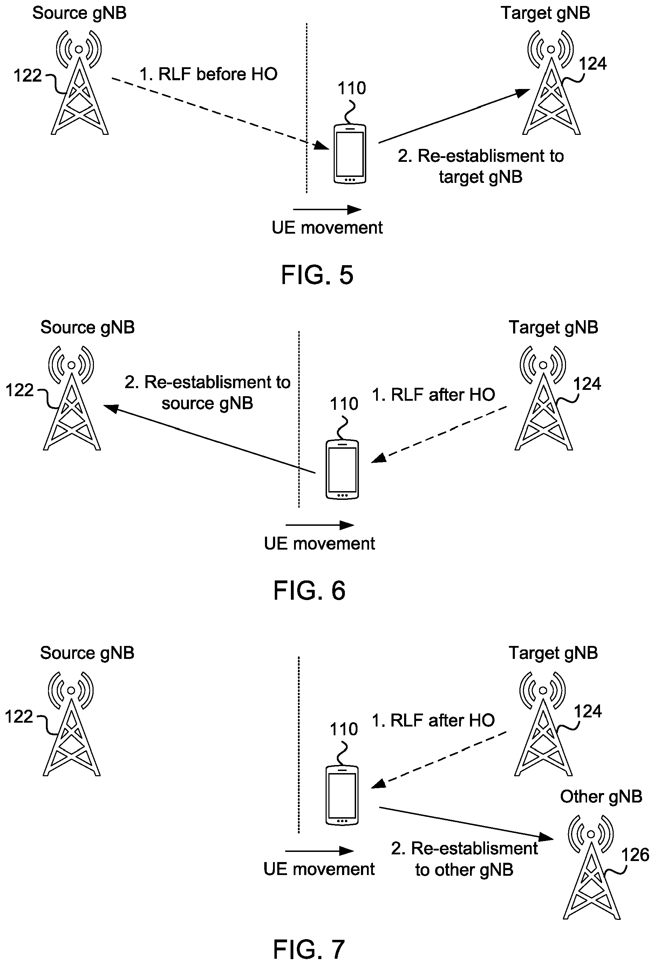

FIG. 5 illustrates an example of connection re-establishment to a target access node in case of a too late (TL) handover. In this example, UE 110 may not have even sent a handover measurement report to source gNB 122 before the radio link failure (RLF), for example because the TTT timer did not expire before the RLF or the measurement report, or the handover command got lost due to degrading channel conditions. Hence, UE 110 may not start the handover procedure early enough and lose connection to source gNB 122. UE 110 may re-establish connection to target gNB 124. In order to avoid such situation, MRO may be used to increase the CIO of the target cell.

FIG. 6 illustrates an example of connection re-establishment to a source access node in case of a too early (TE) handover. In this example, UE 110 is handed over to target gNB 124 before the link quality of the target cell is sufficient. For example, when an A3 entry condition (e.g., neighboring cell becomes better than current serving cell by an offset) has been met and the TTT timer expires, UE 110 may perform handover to target gNB 124. However, shortly after the handover, UE 110 experiences RLF and re-establishes the connection to source gNB 122. In such a case, it is apparent that the handover procedure should have been started later. Hence, MRO ma be used to reduce the CIO value of target gNB 124. Another example of a too early handover is the expiry of the timer T304 ("Handover Failure"). UE 110 may initiate timer T304 in response to reception of the RRC reconfiguration message (cf. operation 306). UE 110 may be configured to stop the timer, in response to successful completion of random access to target gNB 124.

Expiry of the timer may occur when the target cell is not good enough, for example such that even transmissions of UE 110 on the random access channel (RACH) are not successful.

FIG. 7 illustrates an example of connection re-establishment to another access node in case of handover to a wrong cell (WC). In this example, the RLF may occur in the target cell shortly after the handover has been completed, and UE 110 may attempt to re-establish its radio link in a cell served by another gNB 126, which is neither source gNB 122 not target gNB 124. Alternatively, timer T304 may expire during the handover procedure and UE 110 may attempt to re-establish its radio link to other gNB 126.

A ping-pong (PP) handover failure may refer to a situation where UE 110 is handed over to target gNB 124, but shortly after that a handover is performed back to source cell 122. Different types of handover failures are summarized in the following table:

| Failure type | Category | Description |
|---|---|---|
| F0 | TL | T310 expiry before measurement report triggered. |
| F1 | TL | T310 expiry before measurement report received. |
| F2 | TL | Radio Link Control (RLC) measurement report transmission error. |
| F3 | TL | T310 expiry before HO command transmission |
| F4 | TL | T310 expiry before HO command reception |
| F5 | TE | T304 expiry |
| F6 | WC | T310 expiry before HO confirm received |
| F7 | TE or WC | RLC HO confirm transmission error |

Timer T310 may be configured to be initiated by UE 110 upon detecting physical layer problems for the serving cell, e.g., upon receiving a configurable number of consecutive out-of-sync indications.

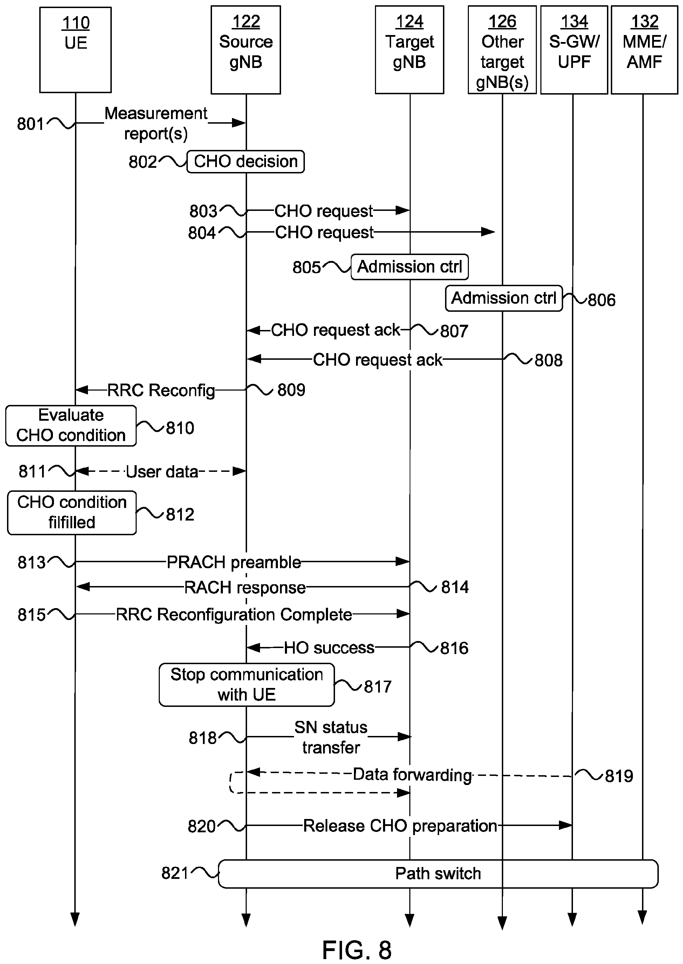

FIG. 8 illustrates an example of a conditional handover procedure. Operations 801 to 809 may be similar to operations 403 to 408 of the (unconditional) handover procedure of FIG. 4, but now performed for a conditional handover. Note however that FIG. 8 includes also other potential target gNB(s) 126, in addition to target gNB 122. An advantage of CHO is that the CHO command (e.g., in RRC reconfiguration message of operation 809) can be sent very early, for example when LTE 110 is still safely within the source cell, without risking the access in the target cell and the stability of the radio link. CHO may therefore improve mobility robustness.

At operation 810, UE 110 may evaluate a CHO condition. In conditional handover, a configured event may be configured to trigger UE 110 to send a measurement report. Based on the measurement report, source gNB 122 may prepare one or more target cells in the same target node (e.g. target gNB 124), or multiple target nodes for the conditional. This may be performed by exchange of CHO request and CHO request acknowledgements between source gNB 122 and target gNBs 124, 126 and sending a CHO command, for example in an RRC reconfiguration message (operation 809). In contrast to the unconditional handover procedure of FOG. 4, where UE 110 may immediately access target gNB 124 to complete the handover, in CHO UE 110 may access target gNB 124, in response to detecting an additional CHO execution condition to be met. This means that the HO preparation and execution phases may be decoupled. The CHO condition may be transmitted to UE 110 by source gNB 122.

At operation 811, user data may be exchanged between UE 110 and source gNB 122.

At operation 812, UE 110 may detect the CHO condition to be fulfilled.

At operation 813, LTE 110 may initiate access to target gNB 124, in response to detecting the CHO to be fulfilled at operation 812. For example, UE 110 may transmit a physical random access channel (PRACH) preamble.

At operation 813, target gNB 124 may respond by a RACH response.

At operation 814, UE 110 may transmit an RRC reconfiguration complete message to target gNB 124.

At operation 816, target gNB 124 may transmit a handover success message to source gNB 122.

At operation 817, source gNB 122 may stop communicating with LTE 110.

At operation 818, source gNB 122 may transmit an SN status transfer message to target gNB 124.

At operation 819, source gNB 122 may forward data of UE 110 (e.g. data packets) from S-GW/UPF 134 to target gNB 124.

If source gNB 122 has prepared more than one target cell for CHO, late data forwarding may be applied as illustrated in operations 815 to 819. Once UE 110 has completed handover execution to target gNB 124 (e.g., LTE 110 has sent RRC reconfiguration complete message, cf. operation 815), target gNB 124 may send "Handover Success" indication (operation 816). When receiving this indication from target gNB 124e, source gNB 122 may stops its transmission and reception to/from LTE 110 (operation 817) and start data forwarding to target gNB 124 (operation 819). It is also possible to perform early data forwarding, where source gNB 122 may forward data of UE 110 to target gNB 124 when sending the RRC reconfiguration to UE 110 (operation 809). This may be useful for example if a single potential target cell is prepared for CHO. This enables to avoid unnecessary data forwarding to target cells which UE 110 may not access.

At operation 820, source gNB 122 the CHO preparations in other target gNB(s) 126 (which are no longer needed). This may be done in response to receiving the "HO Success" indication (operation 816) from the successfully accessed target gNB 124. Other target cells at target gNB 124, to which LTE 110 subsequently performs CHO execution, may be released.

At operation 821 a path switch may be performed, for example similar to operation 418.

Preparation of a target cell may be performed for example as follows. UE 110 may be configured with a measurement configuration, for example event A3 with small offset, e.g., *Offset* = 1 dB, which may be applied based one $Mn > Ms + Offset$, where $Mn$ is the power level (e.g. RSRP) of a neighboring cell and $Ms$ is the power level of the serving cell. The value of *Offset* may be even negative and dependent on how early network 140 is configured to prepare a target cell.

Upon receiving measurement report, source gNB 122 may determine to prepare a target cell. Source gNB 122 may transmit a handover request to target gNB 124. Target gNB 124 may reply with CHO command, which may be signaled in the handover request acknowledgement message. Source gNB 122 may send the CHO command to UE 110. The release of already prepared cell may occur if the source cell has configured a "report on leave" feature. If the report on leave feature is enabled in the reporting configuration, LTE 110 may report to the serving cell (e.g. source gNB 122) a measurement report indicating that a cell (e.g. Cell X) which has fulfilled the A3 event earlier, is fulfilling a leaving condition (e.g. not fulfilling an entry condition anymore). Upon receiving the measurement, source gNB 122 may transmit an RRC reconfiguration message to UE 110 to remove the CHO command for the prepared target cell (Cell X) that is no longer suitable for handover, for example due to reduced signal level of that cell. Source gNB 122 may then sends a CHO cancel to the prepared target cell (Cell X) to release reserved resource(s) which may no longer be useful.

A CHO replace operation may be performed as follows. In response to receiving a measurement report, source gNB 122 may identify potential target cell(s) to prepare. Source gNB 122 may be however configured not to exceed a certain number ($N$) of prepared target cells. If that number is reached, source gNB 122 may release one of the prepared cells, for example the weakest prepared target cell and replace it. Layers 1 to 3 may refer to protocol layers of the Open Systems Interconnect (OSI) model, or a protocol stack of a particular standard, defined for example by 3GPP. For example, Layer 1 may comprise a physical layer, Layer 2 may comprise a link layer, or Layer 3 may comprise a network layer.

Layer 1/2 inter-cell mobility may be configured as follows. In contrast to Layer 3 mobility procedures, where decisions on handovers may be made by the RRC layer, L1/2 inter-cell mobility may be performed by the MAC (medium access control), which may be terminated at a distributed unit (DU) of an access node.

L1/2 inter-cell mobility may include two phases, for example a preparation phase of potential target cells for handover, for example based on L3 measurements (Phase 1), and a handover execution phase with L1/L2 triggered cell change (Phase 2). In contrast to CHO, the HO execution may be initiated by network 140 by sending a MAC control element (MAC CE) to LTE 110.

For example, a centralized unit (CU) of source gNB 122 (serving access node), which may host the RRC layer, may configure LTE 110 to perform L3 measurements for identifying a potential set of target cells for handovers. Upon receiving a measurement report identifying the potential target cells for handover, the CU may request preparation of target cells and receive, from a distributed unit (DU) of source gNB 122 that serves a target cell, a configuration of the target cell (e.g. a protocol layer configuration of PHY, MAC, or RLC (radio link control) layer(s), C-RNTI, random access parameters, system information, or the like), which source gNB 122 may provide to UE 110, e.g., similar to CHO preparation. UE 110 may execute one of these configurations, in response to receiving a MAC CE triggering the handover (cell change) to a specific target cell.

Source gNB 122 may configure UE 110 to report the L1 signal strength (e.g., L1-RSRP) or quality (e.g., L1-SINR (signal-to-interference-plus-noise ratio)), beam measurements for source gNB 122 as the serving cell, and/or the configured prepared target cells. UE 110 may be for example configured to report, for example on a physical uplink control channel (PUCCH), to the MAC layer of source gNB 122 (e.g., a DU of source gNB 122), the strongest beam measurements for the serving cell and the target cells.

In response to determining that there is a target cell having a better radio link beam measurement than the serving cell, for example fulfilling the condition of

$$L1\text{-}RSRP \text{ of target cell} > L1\text{-}RSRP \text{ of serving cell} + Offset,$$

for example for the duration of the time-to-trigger (TTT) interval, source gNB 122 may transmit a MAC CE to trigger the handover to the target cell. This may be in contrast to L3 mobility, where an RRC reconfiguration message may be transmitted by source gNB 122 to LTE 110 for triggering the cell change, for example in case of unconditional handover or a dual active protocol stack (DAPS) handover. In response to receiving the MAC CE for performing the cell change to a specific target cell, LTE 110 may apply its corresponding configuration stored at UE 110 and connect to the target cell by performing random access.

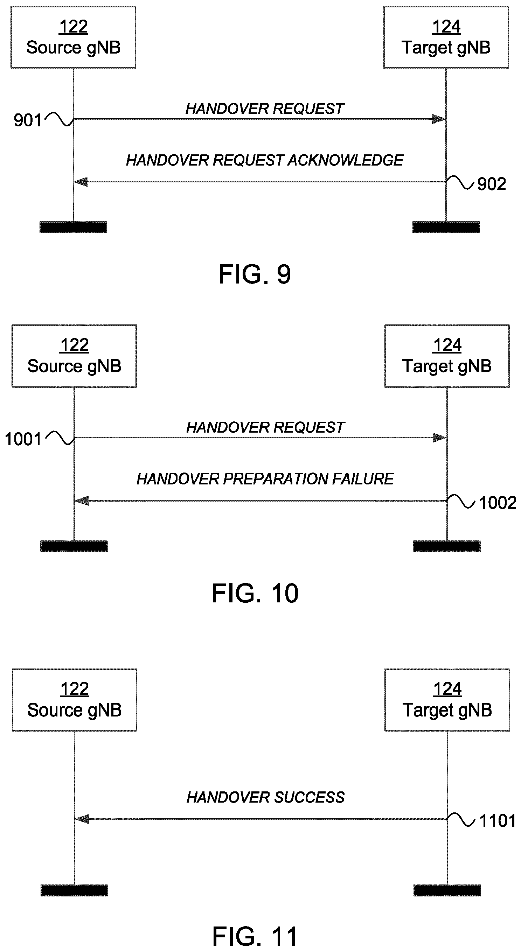

During the handover procedure, nodes of network 140 may transmits various handover-related requests and provide feedback to those requests, as will be further described with reference to FIG. 9 to FIG. 13. The feedback messages may be used to determine feedback data for the performance of ML model 112 of LTE 110.

FIG. 9 illustrates an example of successful operation of handover preparation. Handover preparation may be used to establish necessary resources in a target access node for an incoming handover. If the procedure concerns a conditional handover, parallel transactions with multiple target access nodes may be performed. Possible parallel requests may be identified by a target cell ID (identifier), for example when the LTE AP (access point) IDs are the same at source gNB 122. The handover preparation procedure may apply UE-associated signalling.

At operation 901, source gNB 122 may initiates the procedure by transmitting a handover request message to target gNB 124. When source gNB 122 transmits the handover request message, it may start a timer $TXn_{RELOCprep}$.

At operation 902, target gNB 124 may transmit a handover request acknowledgement message to source gNB 122. If a conditional handover information request information element (IE) is contained in the handover request message, the target gNB 124 may determine that the request is related to a conditional handover and may include a conditional handover information acknowledge IE in the handover request acknowledgement message.

If a target NG-RAN node UE XnAP ID IE is contained in the conditional handover information request IE, which is included in the handover request message, target gNB 124 may remove the existing prepared conditional HO identified by the target NG-RAN node UE XnAP ID IE and a target cell global ID IE. It may be up to implementation of target gNB 124 when to remove the HO information. Upon reception of the handover request acknowledgement message, source gNB 122 may stop timer $TXn_{RELOCprep}$ and terminate the handover preparation procedure. If the procedure was initiated for an immediate handover, source gNB 122 may start timer $TXn_{RELOCoverall}$. Source gNB 122 may be then considered to have a prepared handover for that Xn UE-associated signalling.

FIG. 10 illustrates an example of unsuccessful operation of handover preparation.

At operation 1001, source gNB 122 may transmit a handover request similar to operation 901.

At operation 1002, target gNB 124 may transmit a handover preparation failure message to source gNB 122, for example if target gNB 123 node does not admit at least one protocol data unit (PDU) session resource, or any failure occurs during the handover preparation. The message may contain a cause IE with an appropriate value. If a conditional handover information request IE is contained in the handover request message and target gNB 124 rejects the handover or a failure occurs during handover preparation, target gNB 124 may include the associated target cell ID IE in the handover preparation failure. The handover preparation failure message may be used for determining feedback data indicative of network 140 being the cause for the failure (and not UE 110 or its ML model 112).

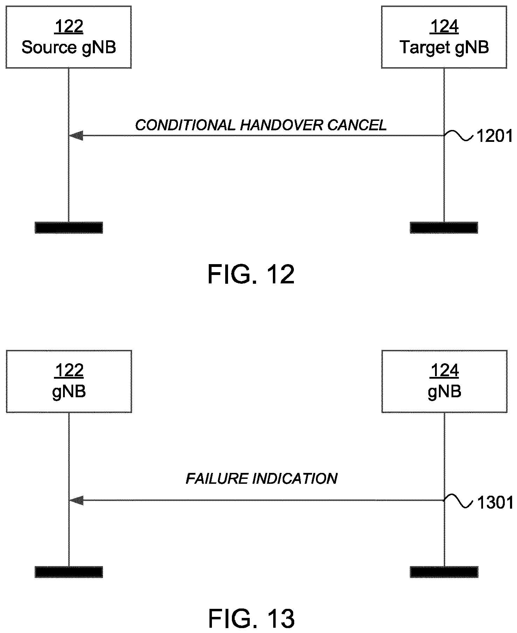

Interactions with handover cancel procedure: If there is no response from the target gNB 124 to the handover request message before timer $TXn_{RELOCoverall}$ expires at source gNB 122, source gNB 122 may cancel the handover preparation procedure towards target gNB 124 by initiating a handover cancel procedure (to be further described with reference to FIG. 12) with the appropriate value for the cause IE. Source gNB 122 may ignore any handover request acknowledgement of handover preparation failure messages received after initiation of the handover cancel procedure, remove any reference, and release any resources related to the concerned Xn UE-associated signalling.

FIG. 11 illustrates an example of successful handover operation. The handover success procedure may be used during a conditional handover or a DAPS handover, for example to enable a target gNB 124 to inform source gNB 122 that UE 110 has successfully accessed target gNB 124. The procedure uses UE-associated signalling

At operation 1101, target gNB 124 may initiate the procedure by sending the handover success message to source gNB 124. If late data forwarding is configured for LTE 110, source gNB 122 may start data forwarding using tunnel information related to a global target cell ID provided in the handover success message. In response to receiving the handover success message, source gNB 122 may consider all other CHO preparations accepted for UE 110 under the same UE-associated signalling connection in target gNB 124 node as cancelled.

Interactions with other procedures: If a conditional handover cancel message (cf. FIG. 12) was received for UE 110 prior to reception of the handover success message, source gNB 122 may consider that UE 110 successfully executed the handover. Source gNB 122 may initiate handover cancel procedure towards the other signalling connections or other candidate target gNB(s) for LTE 110 LTE, if any.

FIG. 12 illustrates an example of successful operation of conditional handover cancellation. The conditional handover cancel procedure may be used to enable target gNB 124 to cancel an already prepared conditional handover. The procedure may use UE-associated signalling.

At operation 1201, target gNB 124 may initiate the procedure by transmitting a conditional handover cancel message to source gNB 122. Target gNB 124 may indicate a reason for cancelling the conditional handover by means of an appropriate cause value included in the message. In response to receiving the conditional handover cancel message, source gNB 122 may consider that target gNB 124 is about to remove any reference to, and release any resources previously reserved for candidate cells associated to the UE-associated signalling, for example identified by a source NG-RAN node UE XnAP ID IE and a target NG-RAN node UE XnAP ID IE. If a candidate cells to be cancelled list IE is included in the conditional handover cancel message, source gNB 122 may consider that only resources reserved for the cells identified by the included cell global identity (CGI) of target gNB 124 are about to be released. The reason indicated in the conditional handover cancel message may be provided as feedback data to LTE 110.

FIG. 13 illustrates an example of a failure indication. A purpose of the failure indication procedure may be to transfer information regarding RRC re- establishment attempts, or received RLF reports, between access nodes. This signalling may be provided by the access node at which a re-establishment attempt was made, or an RLF report is received, to an access node to which the UE concerned may have previously been attached prior to the connection failure. This may aid the detection of radio link failure in handover failure cases. The procedure may use non-UE-associated signalling.

At operation 1301, gNB 124 (which may not act as a target gNB in this example) may initiate the procedure by transmitting the failure indication message to gNB 122 (not necessarily a source gNB). The failure indication may be transmitted by gNB 124, in response to a re-establishment attempt by LTE 110 or receiving an RLF report from LTE 110, when gNB 124 considers that UE 110 may have previously suffered a connection failure at a cell controlled by gNB 122.

The above procedures thus enable exchange of various feedback information for a handover, which may be used as feedback, or for determining feedback, for LTE 110 regarding performance of its ML model 112.

FIG. 14 illustrates an example of a reactive handover. Many handover mechanisms are reactive and prone to errors that may compromise performance of sensitive services such as ultra reliable low latency communication (URLLC) services. As illustrated in FIG. 14, handover measurements may be initiated when SINR from gNB 2 falls below SINR from gNB 1. Measurements may be performed for a duration (time-to-trigger, TTT) until the handover is triggered. TTT may be for example 200 to 300 ms. Triggering of the handover may be further delayed due to the TTT offset (e.g. 1-3 dB) required between the SINR values of gNBs 1 and 2 for triggering the handover. On the other hand, shorter TTT and smaller offset may lead to too early triggering and/or triggering the handover to a suboptimal target cell. The handover may be finally triggered at $t_0$. However, there may still be a significant delay until the handover is completed at $t_1$ and gNB 1 becomes the serving gNB. For example, there may be a break, where no service is provided to the user. Reactive handover may thus include an interruption in time and a delay before a decision is made to perform handover from the current serving cell (gNB 2) to the target cell (gNB 1) Methods for mobility robustness optimization may be applied to adjust handover parameters to avoid too early or too late handovers, but performance of non-ML solutions may not be sufficient.

FIG. 15 illustrates an example of a ML-based predictive handover. ML model 112 may be trained to predict the handover time and target cell identifier (ID) in order to reduce the interruption time. ML model 112 may utilize history of measured signal levels (e.g., RSRP) from the serving cell and neighbouring cells as input data samples and be trained to predict right time for the handover and the probability of each cell to become the next serving cell. Prediction by ML model 112 may be performed during a prediction frame, while the SINR of the current serving gNB (gNB 2) is still above the SINR of other cell(s). At $t_0$, handover to gNB 1 may be triggered based on the prediction by the ML model. The cell with the highest probability may be selected to be the next serving cell (target cell) if the predicted cell is different from the current serving cell. A handover to the predicted cell, in this example gNB 1, may be then triggered. There may still be a delay in execution of the handover and a break in the service, but the handover may still be completed at $t_0$, when gNB 1 becomes the cell with the highest SINR.

To train ML model 112 for predictive handover, training and validation data sets may contain samples of earlier signal measurements (e.g., RSRP, RSRQ, SINR) from a plurality of cells. The desired target cell ID, and/or the desired time of initiating the handover, per input sample of signal measurements may be used as the ground truth label (expected output). The desired target ID or time may be determined based on handovers performed or simulated based on non-ML algorithms for the same task. In case of predictive handover, misprediction (intentionally or unintentionally) may cause UE 110 to select a wrong cell as the serving cell, or to perform the handover too early or too late, which may result in falling in longer outage/interruption in connectivity, which may eventually lead to radio link failure.

During training, ML model 112 may implicitly fingerprint the received signal strength or quality signals and learn to predict the probability that a given cell will have the best received signal strength or quality at a future time instant. This fingerprint may be specific to a geographical area, for example a cell. A handover to a particular cell may be recommended if that cell is not the serving cell and has the highest predicted probability. ML model 112 may for example trained to learn a K-class classification, for example by a long short term memory (LSTM) neural network.

Labels to be used as ground truth data may be estimated offline, for example based on recorded SINR measurements. When ML model 112 is configured to receive a frame of time series of radio measurements (e.g. SINR) as input, the ground truth data (label) may be for example include the cell ID of the radio cell, or the probability of the cell, that is going to be the best cell in next future time step/steps or any feature related to that input frame that ML model 112 is targeted to predict using the input only. When ML model 112 is configured to predict radio beams ID(s), when receiving the radio measurements as input, the ground truth data (label) may be for example the ID(s) of the next beam/beams to which LTE 110 is going to be connected to in next future step/steps or any feature related to that input frame that the ML model is targeted to predict using the input only.

At inference phase, a new frame of received signal strength or quality measurements may be provided to the ML model 112, which may provide as output for example the predicted probabilities of the target cells, beams, or times for handover or beam switch. The output of ML model 112 may for example include a probability distribution vector, where each vector element corresponds to probability of a corresponding cell or beam to be the next serving cell or beam.

ML mode 112 may comprise a neural network. An input to the neural network may comprise an array of received signal strength or quality values, for example signal power values. A time series of signal strength or quality values (e.g., RSRP, RSRQ or SINR) from multiple radio cells may be obtained at LTE 110. LTE 110 may collect the radio signal measurements from the radio cell(s) from which UE 110 receives signals. The input data frame for the neural network may comprise a $K \times$ *No.of time steps* array for each sample of the input data.

The neural network may be configured to perform prediction of the target cell ID for performing a handover. It is however possible to use a similar neural network for other communication network related tasks, such as beam prediction or prediction of an initiation time of a handover or beam switch. The neural network may generate an output of the predicted best SSB-RS (synchronization signal block - reference signal) indexes or physical cell IDs (PCIs) for UE 110 for a time $t$ based on past radio signal measurements. In one example, LSTM network(s) may be applied to predict the target cell ID from past measurement sequences of variable lengths. An LSTM network may be beneficial for time-series prediction due to its capability of learning long-term relations in data and its ability to solve the vanishing gradient problem in recurrent neural network (RNN) by introducing special gates (e.g. forget gate, input gate) . The neural network may comprise four layers, for example two dense input and output layers in addition to two hidden LSTM layers. The input data, comprising multiple samples of received signal strength or quality arrays, may be provided to the input layer. A first hidden LSTM layer may take as input the output of the input layer and provide an output with a rectified linear unit (relu) activation function. A second hidden LSTM layer may take as input the output of the first hidden LSTM layer and provide an output with a relu activation function.

An LSTM layer may include a plurality of LSTM cells. An LSTM cell may include the following components: a forget gate comprising a neural network (NN) with sigmoid output $f_t$, a candidate layer comprising a NN with tanh output $C'_t$ , an input gate comprising a NN with sigmoid output $I_t$, an output gate comprising a NN with sigmoid output $O_t$, a hidden state comprising vector $H_t$, and a memory state comprising vector $C_t$. Inputs to LSTM cell 710 at any step may comprise the current input $X_t$, the previous hidden state $H_{t-1}$ and the previous memory state $C_{t-1}$. Outputs from the LSTM cell may include the current hidden state $H_t$ and the current memory state $C_t$.

The output layer may take as input the output of the second hidden LSTM layer and provide an output with a softmax activation function. The softmax activation may convert the previous LSTM layer output into a probability, for example by

$$\sigma(z)_i = \frac{e^{z_i}}{\sum_{j=1}^{K} e^{z_j}}$$

for $i = 1 ... K$ and $z = (LSTM_{out1} ... LSTM_{outK})$, where $K$ is the output shape, for example the number of radio cells/beams from which the next cell/beam is to be predicted. Softmax activation may therefore apply the exponential function to each element $z_i$ of the input vector z and normalize these values by dividing by the sum of the $K$ exponentials $j = 1... K$. This normalization ensures that the sum of the components of the output vector is $\sigma(z) = 1$.

The neural network may thus provide as output a list of cell probabilities of the $K$ cells, in this example as a probability distribution vector function over the $K$ cells. The probability distribution vector may be provided for example as a vector $[P_{Cell\_1}, P_{Cell\_2}, P_{Cell\_3}, ..., P_{Cell\_K}]$, where the sum of elements (probabilities) in vector is equal to one as given in the following equation:

$$\sum_{i=1}^{K} P_{Cell\_i} = 1.$$

The radio cell with highest predicted probability may be then determined to be the target cell for the handover if it is different from the current serving cell.

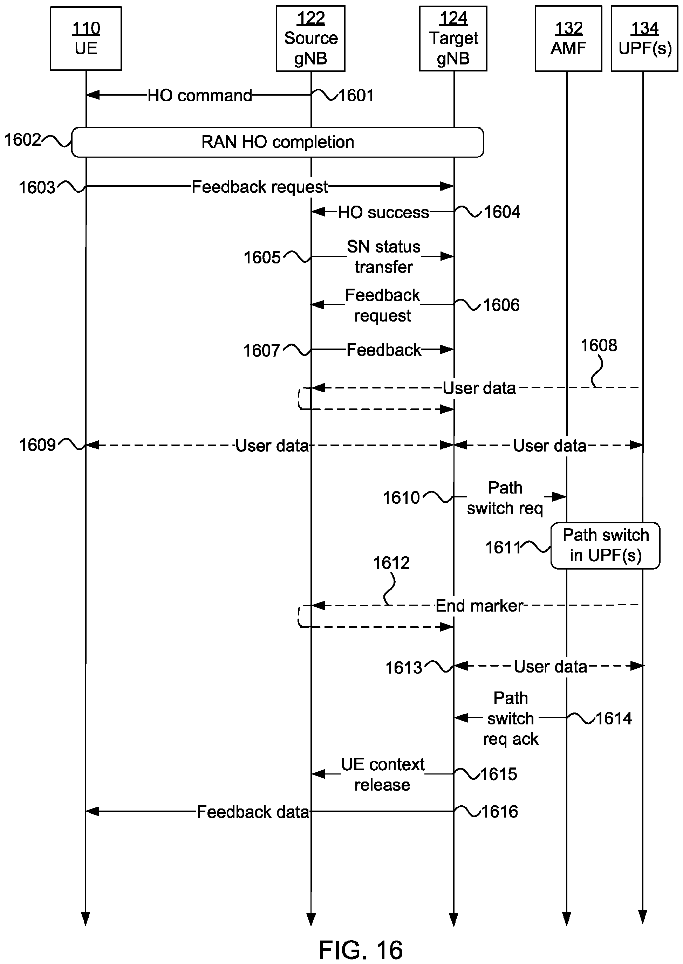

FIG. 16 illustrates an example of a handover process with feedback to user equipment. The procedure of FIG. 16 may be performed for example in connection with the procedure of FIG. 4 or FIG. 8. Handover command of operation 1601 may correspond to handover command of operation 408 or RRC reconfiguration message of operation 809 (including a CHO command). Alternatively, operations similar to FIG. 16 may be applied with L1/L2 mobility. RAN handover completion operation 1602 may comprise operations 409 to 418. However, target gNB 124 may delay transmission of the UE context release request (cf. operation 419) until it has completed retrieval of the feedback data from source gNB 122.

At operation 1603, UE 110 may transmit a request for feedback data (feedback request) to target gNB 124. This request may be generally transmitted to a serving gNB. The feedback request may comprise an identifier or a type of ML model 112 and/or an indication of the network operation, for which the feedback data is requested. In case of handover, the feedback request may be included in an RRC reconfiguration complete message. Alternatively, UE 110 may request for the feedback data in a separate message before the UE context is released at source gNB 122. UE 110 may for example transmit the feedback request, in response receiving a random access response from target gNB 124.

At operation 1604, target gNB 124 may transmit a handover success message to source gNB 122.

At operation 1605, source gNB 122 may transmit an SN status transfer message to target gNB 124.

At operation 1606, target gNB 124 may request feedback data for LTE 110 from source gNB 112. This feedback request may include an identifier of LTE 110, an identifier or a type of ML model 112, and/or an indication of the network operation, for which the feedback data is requested. This operation may be performed in response to the feedback request received from LTE 110 at operation 1603.

At operation 1607, source gNB 122 may transmit the feedback data to target gNB 124. Target gNB 124 may therefore obtain the feedback data for LTE 110 based on reception of LTE context of LTE 110 from source gNB 122. Obtaining the feedback data for LTE 110 may however include deriving the feedback data from, or based on, the data (e.g., UE context data) received from source gNB 122. For example, based on measurement results received from UE 110 and the actual time for triggering the handover, target gNB 124 may determine whether the time predicted by ML model 112 for initiation of the handover was too early, too late, or substantially at a correct time. Alternatively, source gNB 122 may perform similar derivation and provide the result of the derivation as feedback data to target gNB 124.

The feedback data may comprise at least part of the UE context data maintained at source gNB 122. For example, the feedback data may include an indication of a time interval between a handover measurement report (e.g., the measurement report triggering the handover at source gNB 122) and initiation of handover preparation for target gNB 124. Referring to FIG. 4, this time interval may comprise the time between operations 403 and 405, for example the time used for making the handover decision at operation 404. Source gNB 122 may measure this time interval, store it, and provide it to target gNB 124, in response to the feedback request of operation 1606. Alternatively, or additionally, the feedback data may comprise an indication of the duration of the handover preparation phase, for example a time interval encompassing operations 401 and 407.

The feedback data may comprise identifier(s) of gNBs, or cell(s) of the gNB(s), which have rejected the handover of UE 110. For example, if source gNB 122 receives a handover preparation failure message from some gNB (cf. operation 1002), source gNB 122 may record an identifier of that gNB and provide it as feedback data to target gNB 124, in response to the LTE feedback request of operation 1606. Similarly, a reason for the rejection may be indicated by the rejecting gNB to source gNB 122, which may forward the reason as (part of) the feedback data to target gNB 124. Source gNB 122 may receive an indication of the reason for example in connection with the conditional handover cancel procedure of FIG. 12.

The feedback data may comprise a time interval used by source gNB 122 for preparation of target cell(s) for the handover. This time interval may include a time from reception of the measurement report triggering the handover to reception of (C)HO request acknowledgement from the target gNB(s), for example including the time used for operations 404 to 407 or 802 to 808.

At operation 1608, source gNB 122 may start forwarding user data (e.g. data packets) of UE 110 from UPF(s) 134 to target gNB 124.

At operation 1609, UE 110 may communicate data with UPF(s) 134 via target gNB 124.

At operation 1610, target gNB 124 may transmit a path switch request to AMF 132.

At operation 1611, AMF 132 and UPF(s) 134 may perform the path switch in UPF(s) 134, to deliver the user data of UE 110 to target gNB 124 directly (not via source gNB 122).

At operation 1612, source gNB 122 may forward an end marker of the user data to target gNB 124.

At operation 1613, user data of UE 110 may be exchanged between target gNB 124 and UPF(s) 134.

At operation 1614, AMF 1332 may transmit a path switch request acknowledgement to target gNB 124.

At operation 1615, target gNB 124 may transmit a LTE context release request to source gNB 122. Notably, target gNB 124 may transmit the UE feedback request (cf. operation 1606) prior to transmission of the UE context release request. In one example, target gNB 124 may delay transmission of the UE context release message until it has received the feedback (operation 1607).

At operation 1616, target gNB 124 may transmit the feedback data to LTE 110. Based on the received feedback data, UE 110 may determine whether to re-train its ML model 112 or whether to update parameter(s) a non-ML algorithm associated with ML model 112, for example as described with reference to FIG. 2.

When training ML model 112, UE 110 may use the received feedback data as ground-truth data, or derive ground-truth data based on the feedback data. For example, if the feedback data includes identifiers of gNB(s) or cell(s) for which the handover was not possible due to a signal level that is lower than expected by ML model 112, UE 110 may remove those gNB(s) or cell(s) from the ground-truth data and re-train ML model 112 accordingly.

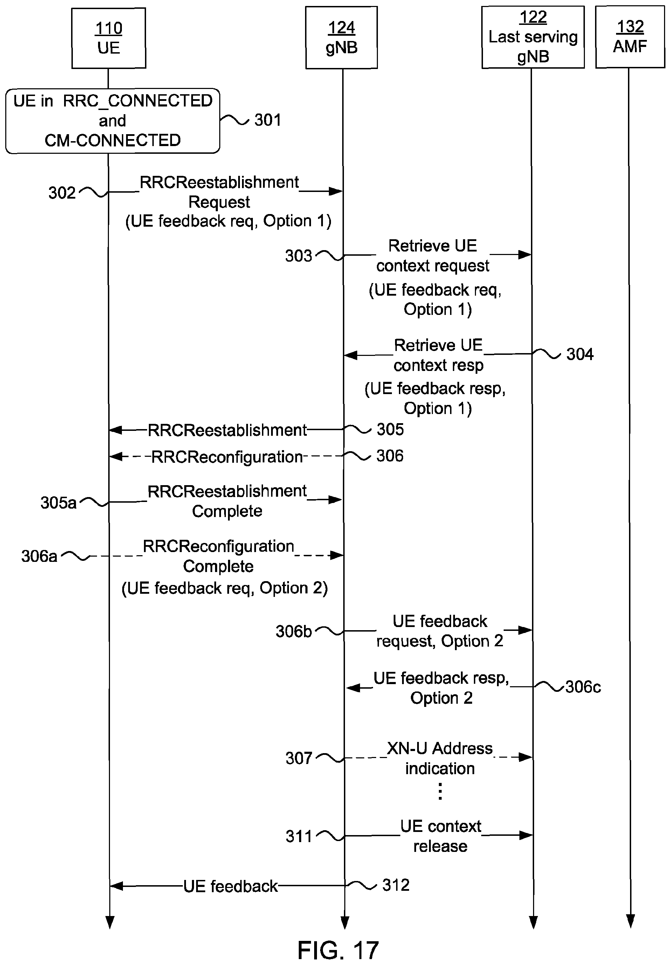

FIG. 17 illustrates an example of a connection re-establishment procedure with feedback to user equipment. The connection re-establishment procedure may be performed for example after a radio link failure (RLF) experienced during a handover, for example as described with reference to FIG. 5, FIG. 6, or FIG. 7. Operations 301 to 311 may be as described with reference to FIG. 3. However, request for feedback data and the feedback data may be included in various messages of the procedure, for example as described below with reference to Options 1 and 2. Furthermore, one or more of the additional operations 306b, 306c, and 312 may be added. In this example, LTE 110 re-establishes connection to gNB 124 and gNB 122 acts as the last serving gNB. Feedback data for UE 110 may be hence provided during a connection re-establishment procedure.

At operation 302, the RRC re-establishment request may include the feedback request (Option 1). UE 110 may re-establish the RRC connection, which may include providing its UE identity (e.g. PCI + C-RNTI) to gNB 124. UE 110 may request for the feedback data for example with RRC re-establishment message IE(s) indicative of the feedback request.

At operation 303, the retrieve LTE context request may include a request for feedback data for LTE 110 (Option 1), for example similar to operation 1606. Operation 303 may be performed, if the UE context of UE 110 is not locally available at gNB 124.

At operation 304, the retrieve UE context response may include the UE feedback data (LTE feedback response) (Option 1). Last serving gNB 122 may provide, in response to the feedback request, either raw UE context data or feedback data derived by last serving gNB 122, for example based on the UE context data. The gNB 124 may therefore obtain the feedback data based on reception of UE context of UE 110 from the last serving gNB 122. Obtaining the feedback data to be transmitted to UE 110 may however include deriving the feedback data from, or based on, the data (e.g., UE context data) received from the last serving gNB 122. The feedback data may be obtained by gNB 124 in response to connection re-establishment of LTE 110 with gNB 124.

At operation 306a, the RRC reconfiguration complete message may include the feedback request (Option 2). UE 110 may for example request for feedback data with IE(s) of the RRC reconfiguration complete message (e.g., if it has not requested the feedback data in the RRC re-establishment request of operation 302).

At operation 306b, UE 110 may transmit the feedback request to the last serving gNB 122 (Option 2).

At operation 306c, the last serving gNB 122 may transmit the UE feedback (UE feedback response) to gNB 124 (Option 2).

At operation 312, gNB 124 may transmit the feedback data to UE 110. The feedback data may include similar data as described with reference to FIG. 16.

Retrieving the feedback data from the last serving gNB 122 may not however always be possible, for example because an RLF report may be fetched up no longer than a certain time limit (e.g., 48 hours) after the RLF. At this time, the UE context may not be available anymore or the load on network 140 may be too high for retrieval of the UE context. In such a case, network 140 (e.g., the current serving access node) may transmit to UE 110 an indication that the feedback data is not available, or, that the feedback data may be provided later, for example with a certain delay.

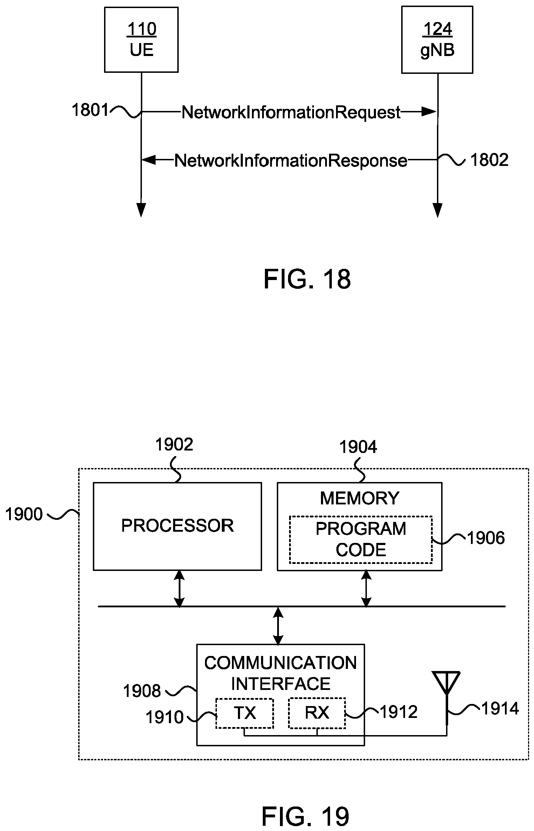

FIG. 18 illustrates an example of a message exchange for retrieving feedback data. One option for delivering the feedback data to LTE 110 is that network 140 indicates to LTE 110 that there is feedback data available and UE 110 thereafter requests the feedback data. For example, gNB 124 may transmit an indication of the availability of the feedback data to UE 110. The indication may be included in a separate message, such as for example an RRC reconfiguration message or RRC re-establishment message. UE 110 may then retrieve the feedback data, as illustrated in FIG. 18. It is however noted that the feedback retrieval procedure of FIG. 18 may be applied also without the indication of the availability of the feedback data.

At operation 1801, LTE 110 may transmit a network information request to gNB 124. The network information request may comprise the request for the UE feedback data.

At operation 1802, gNB 124 may transmit a network information response to LTE 110. The network information response message may comprise the UE feedback data. The network information response message may be transmitted in response to the network information request. The gNB 124 may obtain the feedback data from a source gNB or a last serving gNB as described with reference to FIG. 16 or FIG. 17.

FIG. 19 illustrates an example of an apparatus configured to practice one or more embodiments. Apparatus 1900 may comprise a LTE, an access node, or a component thereof, or in general a device configured to implement functionality described herein, for example a device configured to implement functionality of one or more function of core network 130. Although apparatus 1900 is illustrated as a single device, it is appreciated that, wherever applicable, functions of apparatus 1900 may be distributed to a plurality of devices.

Apparatus 1900 may comprise at least one processor 1902. The at least one processor 1902 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

Apparatus 1900 may further comprise at least one memory 1904. The memory 1904 may be configured to store, for example, computer program code or the like, for example operating system software and application software. The memory 1904 may comprise one or more volatile memory devices, one or more non-volatile memory devices, and/or a combination thereof. For example, the memory may be embodied as magnetic storage devices (such as hard disk drives, , etc.), optical magnetic storage devices, or semiconductor memories (such as mask ROM, PROM (programmable ROM), EPROM (erasable PROM), flash ROM, RAM (random access memory), etc.). Memory 1904 is provided as an example of a (non-transitory) computer readable medium. The term "non-transitory," as used herein, is a limitation of the medium itself (i.e., tangible, not a signal ) as opposed to a limitation on data storage persistency (e.g., RAM vs. ROM).

Apparatus 1900 may comprise a communication interface 1908 configured to enable apparatus 1900 to transmit and/or receive information. Communication interface 1908 may comprise an internal or external communication interface, such as for example a radio interface between LTE 110 and an access node. Alternatively, or additionally, communication interface 1908 may comprise an interface of core network 130, such as for example the service based interface (SBI) bus of 5G core network. Communication interface 1908 may comprise a transmitter (TX) 1910, for example a wireless radio transmitter such as a 4G or 5G radio transmitter, a Wi-Fi radio transmitter, or the like, configured to transmit radio signals. Communication interface 1908 may comprise a receiver (1912), for example a wireless radio receiver such as a 4G or 5G radio receiver, a Wi-Fi radio receiver, or the like. Alternatively, or additionally, transmitter 1910 or receiver 1912 may be configured to transmit/receives signals over a wired medium, such as for example an optical fiber. Transmitter 1910 and receiver 1912 may be combined as a transceiver. Transmitter 1910 or receiver 1912 may be coupled to at least one antenna 1914 to transmit/receive radio signals. Transmitter 1910 or receiver 1912 may comprise analog or digital circuitry, such as for example radio frequency circuitry and baseband circuitry. Functionality of transmitter 1910 or receiver 1912 may be partially implemented by processor 1902 and program code 1906. For example, processor 1906 may be configured to handle a subset of operations (e.g. modulation or forward error correction coding) of transmitter 1900 or receiver 1912, to provide a partially software-based radio apparatus.

Apparatus 1900 may further comprise other components and/or functions such as for example a user interface (not shown) comprising at least one input device and/or at least one output device. The input device may take various forms such a keyboard, a touch screen, or one or more embedded control buttons. The output device may for example comprise a display, a speaker, or the like.

When apparatus 1900 is configured to implement some functionality, some component and/or components of apparatus 1900, such as for example the at least one processor 1902 and/or the at least one memory 1904, may be configured to implement this functionality. Furthermore, when the at least one processor 1902 is configured to implement some functionality, this functionality may be implemented using program code 1906 comprised, for example, in the at least one memory 1904.

The functionality described herein may be performed, at least in part, by one or more computer program product components such as software components. According to an example embodiment, apparatus 1900 comprises a processor or processor circuitry, such as for example a microcontroller, configured by the program code 1906, when executed, to execute the embodiments of the operations and functionality described herein. Program code 1906 is provided as an example of instructions which, when executed by the at least one processor 1902, cause performance of apparatus 1900.

A ML model, for example a neural network, may be implemented by software. For example, parameters (e.g. weights) of a neural network may be stored at the at least on memory 1904 and structured such that flow of input data through layers of the neural network is implemented, when executing associated program instructions. Similarly, transmission of data, for example over a radio interface, may be controlled by software.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), or the like.

Apparatus 1900 may be configured to perform or cause performance of any aspect of the method(s) described herein. Further, a computer program or a computer program product may comprise instructions for causing, when executed by apparatus 1900, apparatus 1900 to perform any aspect of the method(s) described herein. Further, apparatus 1900 may comprise means for performing any aspect of the method(s) described herein. In one example, the means comprises the at least one processor 1902, the at least one memory 1904 including program code 1906 (instructions) configured to, when executed by the at least one processor 1902, cause apparatus 1900 to perform the method(s). In general, computer program instructions may be executed on means providing generic processing functions. Such means may be embedded for example in a personal computer, a smart phone, a network device, or the like. The method(s) may be thus computer-implemented, for example based algorithm(s) executable by the generic processing functions, an example of which is the at least one processor 1902. The means may comprise transmission or reception means, for example one or more radio transmitters or receivers, which may be coupled or be configured to be coupled to one or more antennas, or transmitter(s) or receiver(s) of a wired communication interface.

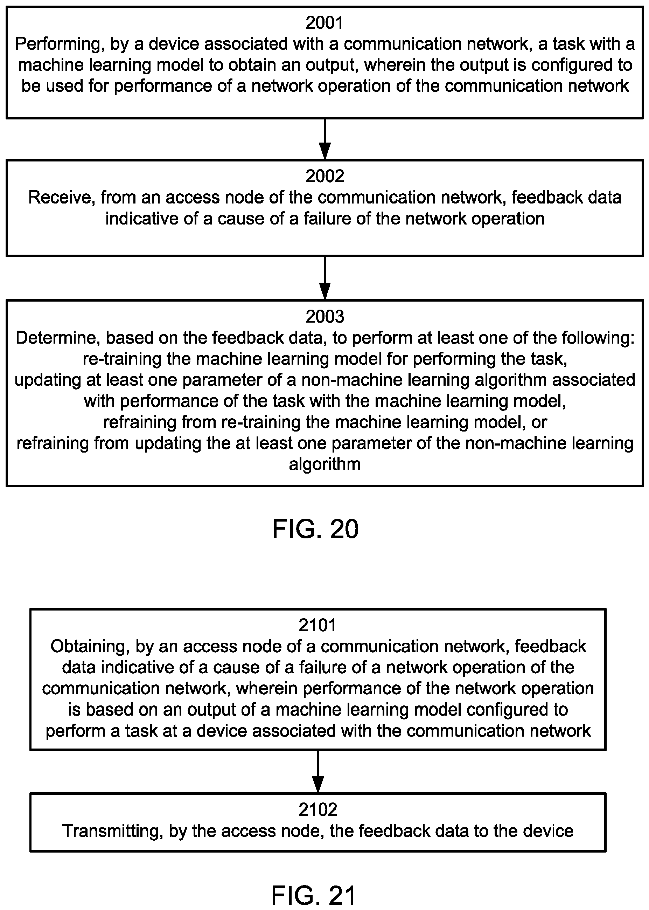

FIG. 20 illustrates an example of a method for operating a machine learning model. The method may be performed by a device, such as UE 110.

At 2001, the method may comprise performing, by a device associated with a communication network, a task with a machine learning model to obtain an output, wherein the output is configured to be used for performance of a network operation of the communication network.

At 2002, the method may comprise receiving, from an access node of the communication network, feedback data indicative of a cause of a failure of the network operation;

At 2003, the method may comprise determining, based on the feedback data, to perform one of the following: re-training the machine learning model for performing the task, updating at least one parameter of a non-machine learning algorithm associated with performance of the task with the machine learning model, refraining from re-training the machine learning model, or refraining from updating the at least one parameter of the non-machine learning algorithm.

The method may be performed for example by apparatus 1900 based on execution of program code 1906 by the at least one processor 1902, and partially with receiver 1912, for example to implement functionality of UE 110, as described above.

FIG. 20 illustrates an example of a method for enabling operation of a ML model of a device. The method may be performed by a network device, such as for example an access node, which may or may not be configured to operate as a target access node of a handover.

At 2101, the method may comprise obtaining, by an access node of a communication network, feedback data indicative of a cause of a failure of a network operation of the communication network, wherein performance of the network operation is based on an output of a machine learning model configured to perform a task at a device associated with the communication network;

At 2012, the method may comprise transmitting, by the access node, the feedback data to the device.

The method may be performed for example by apparatus 1900 based on execution of program code 1906 by the at least one processor 1902, and partially with transmitter 1912, for example to implement functionality of an access node, such as for example target gNB 124, as described above.

Examples of features of the methods are explained above with regard to functionalities of LTE 110 as an example of a device and gNBs 122, 124, 126 as examples of access nodes, and are not repeated here. It should be understood that embodiments described may be combined in different ways unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. Term "or" may be understood to cover also a case where both of the items separated by "or" are included. Hence, "or" may be understood as an inclusive "or" rather than an exclusive "or".

Although subjects may be referred to as 'first' or 'second' subjects, this does not necessarily indicate any order or importance of the subjects. Instead, such attributes may be used solely for the purpose of making a difference between subjects.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

**Claims**

1. A method, comprising:

   performing, by a device associated with a communication network, a task with a machine learning model to obtain an output, wherein the output is configured to be used for performance of a network operation of the communication network;
   receiving, from an access node of the communication network, feedback data indicative of a cause of a failure of the network operation; and
   determining, based on the feedback data, to perform at least one of the following:

   re-training the machine learning model for performing the task,
   updating at least one parameter of a non-machine learning algorithm associated with performance of the task with the machine learning model,
   refraining from re-training the machine learning model, or
   refraining from updating the at least one parameter of the non-machine learning algorithm.

2. The method according to claim 1, wherein the cause is indicative of a source of the failure, and wherein the method further comprises:

   re-training the machine learning model for the task or updating the at least one parameter of the non-machine learning model, in response to determining that the source of the failure is the device; and
   refraining from re-training the machine learning model or from updating the at least one parameter of the non-machine learning model, in response to determining that the source of the failure is not the device.

3. The method according to claim 2, further comprising:

   suspending, based on the feedback data, inference with the machine learning model during the re-training of the machine learning model; and
   performing the task with a second non-machine learning algorithm during the re-training of the machine learning model.

4. The method according to claim 3, wherein the inference with the machine learning model is suspended, in response to receiving a predetermined number of feedback messages indicative of the device as the source of the failure.

5. The method according to any of claims 1 to 4, further comprising:
transmitting a request for the feedback data to the access node.

6. The method according to any preceding claim, wherein the network operation comprises a handover of the device.

7. The method according to claim 6, wherein the feedback data is received from a target access node of the handover.

8. The method according to claim 6 or 7, wherein the task comprises at least one of the following:

determining a time for initiating the handover, or
determining an identifier of the target access node of the handover.

9. The method according to any of claims 6 to 8, wherein the feedback data comprises an indication of at least one of:

the handover having been initiated too early by the device,
the handover having been initiated too late by the device,
the handover having been initiated at a substantially correct time by the device,
a time interval between reception of a handover measurement report by a source access node of the handover and initiation of handover preparation of the target access node by the source access node,
an identifier of at least one access node that has rejected the handover of the device,
a reason for the rejection of the handover by the at least one access node,
a duration of a handover preparation phase, or
a time interval used by the source access node for preparation of one or more target cells for the handover.

10. A method, comprising:

obtaining, by an access node of a communication network, feedback data indicative of a cause of a failure of a network operation of the communication network, wherein performance of the network operation is based on an output of a machine learning model configured to perform a task at a device associated with the communication network; and
transmitting, by the access node, the feedback data to the device.

11. The method according to claim 10, wherein the network operation comprises a handover of the device.

12. The method according to claim 11, further comprising:
obtaining the feedback data based on reception of a user equipment context of the device from a source access node of the handover, wherein the access node comprises a target access node of the handover.

13. The method according to claim 10, further comprising:
obtaining the feedback data based on reception of a user equipment context of the device from a last serving access node of the device, in response to connection re-establishment of the device with the access node.

14. An apparatus comprising means for performing the method according to any of claims 1 to 13.

15. A computer program comprising instructions, which when executed by an apparatus, cause the apparatus perform the method according to any of claims 1 to 13.

FIG. 1

FIG. 2

FIG. 3

FIG. 4

Source gNB

122

1. RLF before HO

110

Target gNB

124

2. Re-establisment to
target gNB

UE movement

## FIG. 5

Source gNB

122

2. Re-establisment to
source gNB

110  1. RLF after HO

Target gNB

124

UE movement

## FIG. 6

Source gNB

122

110  1. RLF after HO

Target gNB

124

Other gNB

2. Re-establisment
to other gNB

126

UE movement

## FIG. 7

FIG. 8

**122**
Source gNB

**124**
Target gNB

901 HANDOVER REQUEST

HANDOVER REQUEST ACKNOWLEDGE
902

FIG. 9

**122**
Source gNB

**124**
Target gNB

1001 HANDOVER REQUEST

HANDOVER PREPARATION FAILURE
1002

FIG. 10

**122**
Source gNB

**124**
Target gNB

HANDOVER SUCCESS
1101

FIG. 11

| 122<br>Source gNB | | 124<br>Target gNB |
| --- | --- | --- |

CONDITIONAL HANDOVER CANCEL

1201

## FIG. 12

| 122<br>gNB | | 124<br>gNB |
| --- | --- | --- |

FAILURE INDICATION

1301

## FIG. 13

FIG. 14

FIG. 15

FIG. 16

FIG. 17

110
UE

124
gNB

1801 ⟋ NetworkInformationRequest ⟶

◀ NetworkInformationResponse ⟋ 1802

## FIG. 18

1902

1904

1900 ⟋

PROCESSOR

MEMORY

PROGRAM
CODE

⟋ 1906

COMMUNICATION
INTERFACE

1908 ⟋

1910 ⟋ TX

RX ⟋ 1912

⟋ 1914

## FIG. 19

2001
Performing, by a device associated with a communication network, a task with a machine learning model to obtain an output, wherein the output is configured to be used for performance of a network operation of the communication network

↓

2002
Receive, from an access node of the communication network, feedback data indicative of a cause of a failure of the network operation

↓

2003
Determine, based on the feedback data, to perform at least one of the following:
re-training the machine learning model for performing the task,
updating at least one parameter of a non-machine learning algorithm associated with performance of the task with the machine learning model,
refraining from re-training the machine learning model, or
refraining from updating the at least one parameter of the non-machine learning algorithm

FIG. 20

2101
Obtaining, by an access node of a communication network, feedback data indicative of a cause of a failure of a network operation of the communication network, wherein performance of the network operation is based on an output of a machine learning model configured to perform a task at a device associated with the communication network

↓

2102
Transmitting, by the access node, the feedback data to the device

FIG. 21

# EUROPEAN SEARCH REPORT

**Application Number**

EP 23 19 8233

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2022/258196 A1 (NOKIA TECHNOLOGIES OY [FI]) 15 December 2022 (2022-12-15) | 1,5,6, 10,11, 14,15 | INV. H04W36/00 |
| A,P | * page 17 – page 35 * | 2-4,7,8, 12,13 | ADD. G06N3/09 G06N3/0442 |
| A | WO 2021/123285 A1 (SONY CORP [JP]; SONY EUROPE BV [GB]) 24 June 2021 (2021-06-24) * the whole document * | 1-15 | |
| E | EP 4 319 302 A1 (NEC CORP [JP]) 7 February 2024 (2024-02-07) * paragraph [0202] – paragraph [0240]; figure 27 * | 1-15 | |
| A | CATT: "AI/ML framework for air interface", 3GPP DRAFT; R1-2206390, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Toulouse, France; 20220822 – 20220826 12 August 2022 (2022-08-12), XP052274322, Retrieved from the Internet: URL:https://ftp.3gpp.org/tsg_ran/WG1_RL1/TSGR1_110/Docs/R1-2206390.zip R1-2206390.docx [retrieved on 2022-08-12] * the whole document * | 1-15 | |

**TECHNICAL FIELDS SEARCHED (IPC)**

H04W

The present search report has been drawn up for all claims

| Place of search | Date of completion of the search | Examiner |
|---|---|---|
| Munich | 14 February 2024 | Koutsopoulou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 8233

14-02-2024

| Patent document cited in search report | | Publication date | Patent family member(s) | | Publication date |
|---|---|---|---|---|---|
| WO 2022258196 | A1 | 15-12-2022 | NONE | | |
| WO 2021123285 | A1 | 24-06-2021 | CN | 114788348 A | 22-07-2022 |
| | | | EP | 4079038 A1 | 26-10-2022 |
| | | | US | 2023354121 A1 | 02-11-2023 |
| | | | WO | 2021123285 A1 | 24-06-2021 |
| EP 4319302 | A1 | 07-02-2024 | EP | 4319302 A1 | 07-02-2024 |
| | | | JP | WO2022209234 A1 | 06-10-2022 |
| | | | WO | 2022209234 A1 | 06-10-2022 |

EPO FORM P0459